# FASCICULE DE BREVET EUROPEEN

(11) **EP 3 099 393 B1**
(45) Date de publication et mention de la délivrance du brevet: **20.12.2017**
(21) Numéro de dépôt: 15706865.1
(22) Date de dépôt: 28.01.2015
(51) Int. Cl.: B01D 19/00, E21B 43/36

(54) **INSTALLATION MODULAIRE ET PROCEDE DE SEPARATION LIQUIDE/GAZ, NOTAMMENT DES PHASES LIQUIDE ET GAZEUSE D'UN PETROLE BRUT.**
MODULARE ANLAGE UND VERFAHREN ZUR FLÜSSIGKEIT/GAS-TRENNUNG, INSBESONDERE FÜR FLÜSSIGE UND GASFÖRMIGE PHASEN VON ROHÖL
MODULAR PLANT AND PROCESS FOR LIQUID/GAS SEPARATION, IN PARTICULAR FOR LIQUID AND GASEOUS PHASES OF A CRUDE OIL

(30) Priorité: 29.01.2014 FR 1400216
(43) Date de publication de la demande: 07.12.2016
(73) Titulaire: Saipem SA, 78180 Montigny-le-Bretonneux (FR)
(72) Inventeur: HALLOT, Raymond, 78960 Voisins Le Bretonneux (FR)
(74) Mandataire: Domange, Maxime
(86) Numéro de dépôt international: PCT/FR2015/050189
(87) Numéro de publication internationale: WO 2015/114247

(56) Documents cités:
- EP-A1- 2 425 883
- FR-A1- 2 528 106
- FR-A1- 2 915 403
- FR-A1- 2 921 844
- US-A- 6 019 825
- US-A1- 2005 081 718
- US-B2- 7 210 530

## Description

La présente invention a pour objet une installation modulaire de séparation liquide/gaz de type vertical ainsi qu'un procédé de séparation de fluide polyphasique, notamment d'huile-eau et de gaz contenus dans du pétrole brut.

Le secteur technique de l'invention est plus particulièrement le domaine de la production pétrolière, et plus particulièrement le domaine des champs de pétrole en mer par grande profondeur.

La production de pétrole en mer profonde est réalisée en général à partir d'un support flottant ancré à proximité des puits de pétrole situés au niveau du fond de la mer, c'est-à-dire à des profondeurs variables de 1000 à 2500m, voire plus. Le support flottant comporte en général des moyens d'ancrage pour rester en position malgré les effets des courants, des vents et de la houle. Il comporte aussi en général des moyens de stockage et de traitement du pétrole ainsi que des moyens de déchargement vers des pétroliers enleveurs, ces derniers se présentant à intervalle régulier pour effectuer l'enlèvement de la production. L'appellation courante de ces supports flottants est le terme anglo-saxon "Floating Production Storage Offloading" (signifiant "moyen flottant de stockage, de production et de déchargement") dont on utilise le terme abrégé "FPSO" dans l'ensemble de la description suivante.

Les têtes de puits sont en général reliées audit FPSO par des conduites sous-marines soit de type SCR, c'est-à-dire conduites suspendues en configuration de chaînette, soit de type tour hybride comprenant :
- un riser vertical dont l'extrémité inférieure est ancrée au fond de la mer et relié à une dite conduite reposant au fond de la mer, et l'extrémité supérieure est tendue par un flotteur immergé en subsurface auquel elle est reliée, et
- une conduite de liaison, en général une conduite de liaison flexible, entre l'extrémité supérieure dudit riser et un support flottant en surface, ladite conduite de liaison flexible prenant, le cas échéant, de par son propre poids la forme d'une courbe en chaînette plongeante, c'est-à-dire descendant largement en dessous du flotteur pour remonter ensuite jusqu'audit support flottant.

L'intégralité de la production de pétrole brut est ainsi en général remontée à bord du FPSO pour y être traitée en vue de séparer le pétrole proprement dit, de l'eau, du gaz, et d'éventuels composants sablonneux. Le pétrole, une fois séparé, est ainsi stocké à bord, le gaz est lavé, puis envoyé vers les turbines à gaz pour la production de l'électricité et de la chaleur nécessaire à bord, puis le surplus est réinjecté dans le réservoir du champ pétrolier de manière à remettre en pression ledit réservoir. L'eau, après avoir été libérée du sable en suspension, est enfin soit rejetée à la mer après extraction poussée de toute particule d'huile, soit réinjectée elle aussi dans le réservoir, un complément d'eau de mer prélevé en sub-surface, venant en général en complément, pour atteindre le débit nécessaire d'injection d'eau dans le réservoir. Le sable extrait, qui ne représente que des quantités minimes, est finalement lavé puis rejeté en mer.

On connaît la méthode de séparation des gaz, eau et huile de pétrole brut couramment employée sur les installations fixes à terre et sur les FPSO qui consiste à utiliser des enceintes résistantes à la pression, de très grands volumes, en général de forme cylindrique allongée, le pétrole brut entrant à une extrémité et cheminant le long de ladite enceinte pendant une durée de l'ordre de 3-10 mn durant lesquelles les diverses phases se séparent naturellement par gravité pour atteindre la seconde extrémité. Le gaz est alors récupéré en partie haute de ladite enceinte, l'eau et le sable en partie basse, et le pétrole (huile) en partie intermédiaire. Il existe une très grande variété de séparateurs de ce type qui intègrent en général des dispositifs complémentaires internes, tels des écrans horizontaux, verticaux ou obliques, dont l'objet est de faciliter la séparation des phases et éviter qu'ils ne se re-mélangent à une étape ultérieure.

Ces séparateurs fonctionnent à basse pression, par exemple 3-10 bars, parfois même en dépression, de manière à optimiser le dégazage du pétrole brut. Si l'on souhaite installer ce type de séparateur au fond de la mer, ladite enceinte doit être capable de résister à l'écrasement sous l'effet de la pression qui est sensiblement de 100 bars, soit sensiblement 10MPa par tranche de 1000m d'eau, ainsi qu'à la pression interne qui dépend de celle du réservoir pétrolier et peut atteindre dans certains cas 1400 bars. Ainsi la transposition d'une telle enceinte pour son utilisation en grande et très grande profondeur nécessiterait des épaisseurs de paroi de 100 à 300 mm pour résister à l'implosion et de tels éléments de chaudronnerie seraient très délicats et très coûteux à réaliser et à installer au fond de la mer à grande profondeur.

On connait dans FR 2 915 403 au nom de la demanderesse un dispositif de séparation gaz-liquide sous-marine, mais celui-ci comprend une enceinte renfermant un ensemble d'enceintes disposées verticalement reliés fixement les uns aux autres de masses et volumes importants, cet ensemble s'avérant, dans certains cas, difficile à mettre en place au fond de la mer et nécessitant des navires d'installation de capacité de levage offshore importante notamment requérant la mise en oeuvre de navires d'installation de plus de 200m de long. En outre, des éléments internes de l'enceinte tels les capteurs risquent de tomber en panne et/ou de s'encrasser avec en outre éventuellement un risque potentiel de bouchage des sorties d'évacuation de liquide. Ces incidents requièrent une maintenance qui ne peut pas être réalisée par déconnection et récupération de l'enceinte individuellement par les bateaux usuels (connu sous la dénomination « IMR vessel ») de maintenance qui sont généralement de taille et capacité de levage relativement réduites. On connaît aussi une installation sous-marine dans FR2528106 ou une jupe est montée autour du dispositif de dégazage. Dans un autre domaine, dans FR 2 961 712 au nom de la demanderesse, on a proposé une installation modulaire de séparation liquide-liquide sous-marine constituée d'une pluralité de conduites légèrement inclinées par rapport à l'horizontale en parallèle connectables et déconnectables individuellement à volonté et qui peuvent donc être installé au fond et donc manutentionnés limitant ainsi la masse des éléments à manutentionner depuis la surface.

Un but de la présente invention est de fournir un dispositif de séparation gaz/liquide amélioré apte à être installé et fonctionner au fond de la mer à grande profondeur, notamment au moins 1000m, qui soit plus simple et moins coûteux à réaliser, installer et mettre en oeuvre au fond de la mer, et plus particulièrement, une installation qui puisse être installé et récupérable avec un navire de taille et capacité de levage réduites et dont la maintenance puisse être réalisé à l'aide de navire de taille et capacité de levage usuelle pour la maintenance et assistance d'installation offshore.

Pour ce faire, la présente invention fournit une installation sous-marine modulaire de séparation liquide/gaz de deux phases respectivement liquide et gazeuse d'un fluide, notamment les phases liquide et gazeuse d'un pétrole brut, comprenant :
(a) une structure support principale reposant et/ou ancrée au fond de la mer sur laquelle sont connectés ou aptes à être connectés de manière réversible une pluralité de dispositif unitaire de séparation liquide/gaz, et
(b) au moins un dispositif unitaire de séparation liquide/gaz fixé sur ladite structure support principale, chaque dit dispositif unitaire de séparation liquide/gaz comprenant une enceinte unique comprenant une paroi étanche résistante à la pression au fond de la mer et à la pression interne dudit fluide disposée selon un axe de révolution vertical, ladite enceinte renfermant :
   b1) une première conduite interne d'amenée du fluide polyphasique remontant au sein de ladite enceinte depuis son extrémité inférieure comprenant ou coopérant avec un premier orifice traversant une partie de paroi dénommée paroi de fond de l'enceinte, jusqu'à son l'extrémité supérieure ouverte débouchant en partie supérieure de l'enceinte, et
   b2) une deuxième conduite interne d'évacuation de gaz s'étendant au sein de ladite enceinte depuis son extrémité supérieure ouverte, de préférence disposée plus haut que ladite ouverture supérieure de la première conduite, jusqu'à son extrémité inférieure comprenant ou coopérant avec un deuxième orifice traversant la paroi de fond de l'enceinte, et
   b3) un troisième orifice traversant ladite paroi de fond de l'enceinte autour desdits premier et deuxième orifices de la paroi de fond de l'enceinte, et
c) une pluralité de pièces de connexion à 3 voies fixées sur ladite structure support, dont au moins une dite pièce de connexion connectée à une dite enceinte, chaque dite pièce de connexion comprenant :
   c1) un premier conduit de connexion dont une extrémité supérieure est connectée ou apte à être connectée à un dit premier orifice de la paroi de fond de ladite enceinte, ledit premier conduit de connexion comprenant un premier orifice de sortie étant connecté ou apte à être connecté à une conduite externe d'alimentation en dit fluide polyphasique au fond de la mer ou un élément de conduite relié à l'extrémité d'une conduite externe d'alimentation en dit fluide polyphasique au fond de la mer, et
   c2) un deuxième conduit de connexion dont une extrémité supérieure est connectée ou apte à être connectée à un dit deuxième orifice de la paroi de fond de ladite enceinte, ledit deuxième conduit de connexion comprenant un deuxième orifice de sortie connecté ou apte à être connecté à une conduite externe d'évacuation de gaz, et
   c3) un troisième conduit de connexion disposé autour desdits premier et deuxième conduits de connexion à son extrémité supérieure connectée ou apte à être connectée à un dit troisième orifice de la paroi de fond de ladite enceinte, ledit troisième conduit de connexion comprenant un troisième orifice de sortie connecté ou apte à être connecté à une conduite externe d'évacuation de liquide.

De préférence, ledit deuxième orifice de la paroi de fond de l'enceinte est un deuxième orifice annulaire disposé coaxialement autour dudit premier orifice tubulaire de la paroi de fond de l'enceinte, et ledit troisième orifice de la paroi de fond de l'enceinte est un troisième orifice annulaire disposé coaxialement autour desdits premier et deuxième orifices de la paroi de fond de l'enceinte, et ladite pièce de connexion à trois voies est une pièce de connexion à trois voies coaxiales fixée verticalement sur ladite structure support comprenant :
c1) un premier conduit de connexion disposé verticalement et dont ledit premier orifice de sortie est constitué par l'extrémité inférieure axiale dudit premier conduit de connexion, et
c2) un deuxième conduit de connexion, disposé coaxialement et autour dudit premier conduit à son extrémité supérieure, connecté ou être apte à être connecté verticalement à un dit deuxième orifice annulaire de ladite paroi de fond de l'enceinte, comprenant un dit deuxième orifice de sortie latéral, et
c3) un troisième conduit de connexion disposé coaxialement autour desdits premier et deuxième conduits de connexion à son extrémité supérieure, connecté ou apte à être connecté verticalement à un dit troisième orifice annulaire de ladite paroi de fond de l'enceinte, comprenant un dit troisième orifice de sortie latéral.

Plus particulièrement, lesdits premier et deuxième orifices de sortie latéraux sont orientés dans deux directions diamétralement opposées de chaque côté de la pièce de connexion et dans une direction sensiblement perpendiculaire à ladite direction axiale verticale.

On entend par connexion « de manière réversible » que les dispositifs unitaires de séparation après connexion sur la structure support peuvent être déconnectés pour être remonté en surface et/ou subir une maintenance avant d'être reconnecté.

Avantageusement, ladite structure support supporte des vannes coopérant avec les conduite externes d'alimentation en fluide, conduite externe d'évacuation de gaz et respectivement conduite externe d'évacuation de liquide pour permettre la fermeture des dites conduites externes avant connexion et déconnexion d'un dit dispositif unitaire de séparation.

On comprend aussi que ledit premier conduit de connexion est ouvert à son extrémité inférieure en continuité axiale avec son ouverture supérieure connectée ou connectable au dit premier orifice tubulaire central de l'enceinte, et, en revanche, lesdits deuxième et troisième conduits de connexion de la pièce de connexion 3 voies sont fermés à leurs extrémités inférieures axiales.

La faculté de mettre en oeuvre une pluralité de dits dispositifs unitaires permet de mettre en oeuvre des enceintes de taille et poids relativement faibles, et notamment inférieure à 100 T de préférence inférieur à 50 T, de manière à pouvoir les descendre depuis la surface jusqu'à une dite structure support au fond de la mer, notamment à des grandes profondeurs de plus de 1000 m voire plus de 3000m, avec des bateaux de maintenance de capacité de levage usuels pour les bateaux d'assistance et maintenance d'installation offshore. Ainsi, il est possible d'augmenter ou réduire le nombre de dispositifs unitaires pour traiter une quantité requise de fluide à séparer ou en assurer la maintenance en surface, à volonté en tant que de besoin.

La disposition coaxiale selon l'invention des dits premier, deuxième et troisième orifices traversant la paroi de fond de l'enceinte et des dits premier, deuxième et respectivement troisième conduits de ladite pièce de connexion est particulièrement avantageuse à plusieurs titres.

Tout d'abord, cette disposition coaxiale permet qu'après connexion de la pièce de connexion avec lesdits premier, deuxième et troisième orifices en sous face de la paroi de fond de ladite enceinte, un premier joint interne d'étanchéité entre ledit premier conduit de la pièce de connexion et l'extrémité inférieure dudit premier orifice tubulaire de la conduite interne d'amenée de fluide, est sensiblement en équipression, se trouvant exposé d'un côté à la pression P1 à l'intérieur de ladite première conduite interne d'amenée du fluide, et de l'autre côté sensiblement la même pression P1 dans ladite deuxième conduite interne d'évacuation du gaz. De même, un deuxième joint interne d'étanchéité entre ledit deuxième conduit de la pièce de connexion et l'extrémité inférieure dudit deuxième orifice annulaire de la conduite interne d'évacuation de gaz, se trouve exposé d'un côté sensiblement à la pression P1 dans ladite deuxième conduite interne et de l'autre côté au sein de ladite enceinte à l'extérieur de ladite deuxième conduite interne d'évacuation de gaz également sensiblement à la même pression P1.

Cette équipression des deux joints internes est particulièrement avantageuse car le débit de fuite de fluide en cas de défaillance desdits joints est relativement négligeable. De plus, le risque de fuite d'eau de mer dans la conduite de gaz est extrêmement faible, car la défaillance simultanée des 3 joints concentriques serait nécessaire pour que cet évènement critique pour la ligne de gaz puisse se produire.

La disposition coaxiale de la pièce de connexion avec lesdits premier, deuxième et troisième orifices en sous face de la paroi de fond de ladite enceinte est aussi avantageuse pour réaliser plus aisément la connexion de l'enceinte avec ladite pièce connexion car elle autorise des rotations angulaires relatives de l'enceinte selon l'axe verticale axial de l'enceinte et de ladite pièce de connexion lors de la descente et de l'accostage de l'enceinte sur la pièce de connexion, ces variations angulaires se produisant fréquemment en pareilles circonstances et étant difficile à empêcher. Ainsi, le guidage d'accostage se trouve simplifié ne requérant aucune indexation angulaire précise pour réaliser cet accostage.

Ladite deuxième conduite interne et ledit deuxième conduit de connexion peuvent être disposés coaxialement à l'intérieur de ladite première conduite interne et respectivement dudit premier conduit de connexion, au niveau desdits premier et deuxième orifices de l'enceinte. Toutefois, de préférence, ladite deuxième conduite interne et ledit deuxième conduit de connexion sont disposés coaxialement autour de ladite première conduite interne et respectivement dudit premier conduit de connexion au niveau desdits premier et deuxième orifices de l'enceinte. En effet, la disposition centrale axiale de l'ouverture à l'extrémité inférieure dudit premier conduit central de ladite pièce de connexion est avantageuse car elle permet en outre que ladite conduite externe d'alimentation en dit fluide polyphasique au fond de la mer ou ledit élément de conduite relié à l'extrémité d'une conduite externe d'alimentation en dit fluide polyphasique au fond de la mer, présente un rayon de courbure suffisamment élevé (sans réaliser un coude en T) au niveau de sa jonction avec la pièce de connexion par rapport à la direction axiale ZZ' d'écoulement du fluide au sein de ladite pièce de connexion puis ladite première conduite interne axiale pour ne pas perturber cet écoulement et donc éviter de cisailler le fluide pour éviter le fractionnement de bulles de gaz et/ou de gouttelettes de liquide rendant la séparation gaz-liquide ultérieure plus difficile, avant la séparation de phase au sein de l'enceinte en sortie supérieure de la première conduite.

De préférence, ladite structure support reposant au fond de la mer supporte au moins un dispositif de division et distribution du fluide polyphasique présentant un unique orifice tubulaire principal d'alimentation axial disposé de préférence verticalement, dont l'extrémité inférieure ouverte est connectée ou connectable à l'extrémité d'une conduite externe d'alimentation en dit fluide polyphasique au fond de la mer, et dont l'extrémité supérieure axiale ouverte communique avec une pluralité d'orifices secondaires tubulaires de sortie inclinés par rapport à ladite direction axiale, de même diamètre et inclinés d'un même angle (béta) et disposés symétriquement et régulièrement par rapport et autour de ladite direction axiale, lesdits orifices secondaires tubulaires de sortie étant connectés ou aptes à être connecté à une pluralité d'éléments de conduite de transfert de fluide d'alimentation connectés ou aptes à être connectés respectivement à une pluralité de dits premiers conduits de dites pièces de connexion connectées ou aptes à être connectées aux extrémités inférieures d'une pluralité de dites enceintes.

De préférence, lesdites pièces de connexion et dites enceintes sont disposées par rapport audit dispositif de division, de préférence au-dessus et autour dudit dispositif de division, de telle sorte que les pertes de charge entre ledit dispositif de division et lesdites enceintes soient sensiblement identiques entres-elles.

De préférence encore, lesdites pièces de connexion et lesdites enceintes sont disposées symétriquement par rapport audit dispositif de division au-dessus et autour dudit dispositif de division.

On comprend que lesdits orifices secondaires tubulaires de sortie présentent un diamètre inférieur à celui dudit orifice tubulaire principal d'alimentation axial. Ainsi, le flux de fluide polyphasique d'alimentation se trouve divisé en une pluralité de flux de même débit, le débit de chaque flux divisé devenant ainsi inférieur au flux principal arrivant par la conduite externe principale d'alimentation.

Ce dispositif de division de flux de fluide, est avantageux car il permet de distribuer en parts égales et homogénéiser le fluide envoyés au sein des différents dispositifs de séparation unitaires en termes de composition et en termes de pertes de charges subies par le fluide au sein des dites éléments de conduite de transfert.

Plus particulièrement, ladite enceinte est solidaire de premiers éléments de guidage du type mâle ou de préférence femelle, disposés à l'extérieure de ladite enceinte, et ladite structure support comporte des deuxièmes éléments de guidage, du type femelle ou respectivement mâle, coopérant ou apte à coopérer avec lesdits premiers éléments de guidage complémentaire pour réaliser un accostage vertical d'un dit dispositif unitaire en face d'une dite pièce de connexion.

On comprend que ces premiers et deuxièmes éléments de guidage permettent de réaliser plus aisément les connections coaxiales des dits extrémités supérieures des dits premier, deuxième et troisième conduits de la pièce de connexion avec lesdits premier, deuxième et respectivement troisième orifices traversant la paroi de fond de l'enceinte descendue depuis la surface.

Plus particulièrement, ladite enceinte comprend une paroi latérale cylindrique à section circulaire, dont l'extrémité supérieure est fermée par une calotte bombée, de préférence sphérique et dont la paroi de fond à son extrémité inférieure est en forme d'entonnoir se rétrécissant vers le bas pour former une paroi inférieure tubulaire verticale délimitant ledit troisième orifice annulaire d'évacuation de liquide. La forme d'entonnoir facilite pour l'évacuation des sédimentations solides notamment de sable.

Plus particulièrement, ladite première conduite interne d'amenée du fluide polyphasique s'étend verticalement, de préférence sensiblement dans l'axe de ladite enceinte, à l'intérieur de ladite deuxième conduite interne dessous une partie supérieure de la première conduite interne, laquelle partie supérieure de première conduite interne forme une boucle de retournement, à l'extérieur de ladite deuxième conduite interne, notamment une boucle à incurvations multiples en forme de col de cygne, se terminant par une buse de sortie de fluide de préférence à paroi évasée définissant une dite ouverture supérieure de ladite première conduite interne, de préférence encore à section de forme aplatie, de sorte que ladite ouverture supérieure de la première conduite débouche à proximité de la paroi latérale de l'enceinte et que le fluide s'en écoule parallèlement à ladite paroi latérale cylindrique et orienté dans une direction inclinée vers le bas, et ladite deuxième conduite interne d'évacuation de gaz s'étend axialement de manière coaxiale à ladite première conduite interne dessous ladite partie supérieure de celle-ci.

La forme aplatie de la section de ladite ouverture de ladite buse provoque un écoulement laminaire du fluide plaqué contre la paroi de l'enceinte. D'autre part, la forme évasée en s'élargissant de la paroi de ladite buse ralentit la vitesse d'écoulement du fluide en sortie de la conduite d'amenée de fluide. Et ce ralentissement du fluide ainsi que son écoulement tangentiel à la paroi latéral de l'enceinte du fluide polyphasique en sortie de ladite buse de par la force centrifuge qu'il subit, empêchent le choc du fluide contre la paroi et favorisent la séparation en deux phases de gaz et liquide dudit fluide en minimisant le fractionnement des bulles de gaz, ainsi que la projection de gouttes de liquide vers l'orifice d'aspiration de ladite conduite interne d'évacuation de gaz.

De préférence, pour minimiser le fractionnement des bulles de gaz, ladite buse de sortie à l'extrémité supérieure de ladite première conduite interne est en outre orientée inclinée vers le bas d'un angle sensiblement identique à celui de la gouttière hélicoïdale d'évacuation de liquide décrite ci-après.

Dans un mode préféré de réalisation lesdites première conduite interne et deuxième conduite interne présentent des portions coaxiales de plus grands diamètres que leurs parties inférieures respectives. Ladite première conduite interne comporte en effet une portion intermédiaire de plus grand diamètre en partie médiane de manière à contribuer à un ralentissement de la vitesse d'écoulement du fluide au sein de ladite première conduite, la deuxième conduite interne coaxiale subissant également le même élargissement de diamètre en vis-à-vis de ladite première conduite interne, pour maintenir un espace annulaire entre lesdites première et deuxième conduites internes sensiblement constant.

Plus particulièrement, l'enceinte comprend une gouttière hélicoïdale fixée à proximité de et/ou contre la surface interne de ladite paroi latérale de l'enceinte et dont l'extrémité supérieure est en contre bas de l'ouverture supérieure de la première conduite interne et l'extrémité inférieure arrive au-dessus dudit troisième orifice annulaire.

Dans un mode de réalisation, ladite gouttière hélicoïdale est fixée à ladite deuxième conduite interne.

Ladite gouttière hélicoïdale permet de favoriser la séparation liquide-gaz en augmentant le temps de résidence du fluide partiellement dégazé pour descendre au fond de l'enceinte et canaliser l'évacuation dudit liquide séparé dudit gaz en sortie de ladite buse vers ladite troisième orifice annulaire périphérique. Ces caractéristiques, combinées à la mise en oeuvre d'une buse de sortie évasée telle que décrite ci-dessus, permettent aussi que la vitesse des particules de fluide partiellement dégazé s'écoulant en descente à l'intérieur de ladite enceinte, soit réduit par rapport à la vitesse des particules de fluide brut entrant dans ladite première conduite interne.

Plus particulièrement, l'enceinte renferme dans sa partie supérieure un dispositif de filtration de gouttelettes de liquide, de préférence un dispositif de coalescence, sur le chemin du gaz entre l'ouverture supérieure de la première conduite interne et l'ouverture supérieure de la deuxième conduite interne. De cette façon ce type de dispositif coalesceur est du type tamis (aussi dénommé « débrumisateur » ou en anglais « demister ») et réalise un filtrage des gouttelettes de liquide pouvant être entrainées par le gaz.

Plus particulièrement, l'enceinte renferme des capteurs de détection de pression et capteur de niveau de liquide au sein de l'enceinte, de préférence un dispositif de contrôle de niveau qui est une sonde de type radar ou sonar ou un capteur de niveau nucléonique constitué d'une barre émettrice de rayons et une ou plusieurs barres de mesure permettant de mesurer le profil de densité du fluide sur toute la hauteur de l'enceinte. Un tel capteur, connu de l'homme de l'art, permet ici de contrôler que le niveau de liquide arrive au-dessus de l'ouverture inférieure dudit troisième orifice de la première conduite interne et ne dépasse pas au-dessus de l'ouverture supérieure de la deuxième conduite interne d'évacuation de gaz, c'est-à-dire suffisamment éloigné desdites ouvertures supérieures desdites première et deuxième conduites internes.

Plus particulièrement, l'enceinte est formée de deux parties d'enceinte fixées l'une à l'autre comprenant :
- une partie supérieure de paroi comprenant à son extrémité supérieure une calotte bombée de préférence sphérique, et
- une partie inférieure de paroi comprenant une dite paroi de fond.

Cette caractéristique permet de faciliter la maintenance des éléments à l'intérieur de l'enceinte, tels que le dispositif coalesceur, les capteurs, lesdites premier et deuxième conduites internes, la gouttière hélicoïdale, en y accédant par désolidarisation des deux parties de paroi de l'enceinte, et le cas échéant en remontant en surface la seule partie supérieure de l'enceinte et des équipements qui lui sont fixés, pour réaliser leur maintenance.

Plus particulièrement, ladite structure support comprend une pluralité de dites pièces de connexion et dites enceintes qui y sont connectées, de préférence d'au moins 4 dites pièces de connexion, de préférence disposées symétriquement.

Selon d'autres caractéristiques particulières :
- ladite enceinte est de forme allongée à section circulaire dont l'extrémité supérieure est en forme de calotte sphérique partielle, de type cigare, disposé verticalement ; la forme de ladite enceinte lui confère une bonne résistance à la pression hydrostatique au fond de la mer, permettant de mettre en oeuvre des parois de seulement 10 à 300mm d'épaisseur ;
- la longueur L1 de ladite enceinte est supérieure ou égale à 10 fois son diamètre D1, de préférence de 15 à 30 fois son diamètre D1 ; L1 étant de préférence encore de 5 à 50m et son diamètre D1 de 0.5 à 5m ; ce dimensionnement des diamètre et épaisseur de paroi assure une résistance à la compression à grand fond optimale pour les parois de ladite enceinte résistante à la pression;
- l'ouverture à l'extrémité supérieure de ladite deuxième conduite interne est située à une hauteur h par rapport à l'ouverture supérieure de ladite première conduite interne d'au moins 1 m.

La présente invention a aussi pour objet un dispositif unitaire de séparation liquide/gaz de deux phases respectivement liquide et gazeuse d'un fluide, utile dans une installation modulaire tel que défini ci-dessus.

La présente invention a aussi pour objet un procédé de réalisation d'une installation modulaire selon l'invention caractérisé en ce qu'on réalise les étapes successives suivantes dans lesquelles :
a) on descend un dit dispositif unitaire suspendu à un lien depuis un navire en surface, et
b) de préférence, on guide son approche d'accostage avec une dite pièce de connexion fixée sur ladite structure support, à l'aide de premiers éléments de guidage solidaires de ladite enceinte et de dits deuxièmes moyens de guidage solidaires de ladite structure support, lesdits deuxièmes éléments de guidage coopérant avec lesdits premiers éléments de guidage, et
c) on connecte ladite enceinte à une dite pièce de connexion, de manière déconnectable, à l'aide d'une bride de fixation et de joints d'étanchéité coaxiaux entre lesdits premier, deuxième et troisième orifices traversant la paroi de fond de l'enceinte et lesdits premier, deuxième et respectivement troisième conduits de connexion de ladite pièce de connexion.

La présente invention a aussi pour objet un procédé de séparation des deux phases liquide et gazeuse d'un pétrole brut à l'aide d'une installation modulaire selon l'invention, caractérisé en ce que l'on réalise les étapes suivantes, dans lesquelles :
1) on envoie le pétrole brut, par l'intermédiaire d'une conduite d'arrivée, jusqu'audit premier orifice de ladite paroi de fond de l'enceinte via et à travers ledit premier conduit une dite pièce de connexion, à une pression réduite P1, inférieure à la pression statique au fond de la mer P2, et
2) le pétrole brut remonte au sein de ladite première conduite interne enceinte, puis s'écoule en sortie supérieure de ladite première conduite interne en flux tangentiellement à la paroi latérale à section circulaire de l'enceinte ce qui provoque sa séparation en une phase liquide et une phase gazeuse, puis
3) la phase liquide ou fluide partiellement dégazé redescend vers ledit troisième orifice de la paroi de fond à l'extrémité inférieure de l'enceinte, et de préférence remplit ladite enceinte jusqu'à un niveau en hauteur dessous de l'ouverture supérieure de ladite première conduite interne, et on la récupère au niveau d'une conduite d'externe d'évacuation de liquide connectée au dit troisième orifice de sortie de ladite pièce de connexion, et
4) le gaz séparé dudit pétrole est aspiré dans ladite deuxième conduite interne vers ledit deuxième orifice de la paroi de fond à l'extrémité inférieure de l'enceinte, et on le récupère, au niveau d'une conduite d'externe d'évacuation de gaz connectée au dit deuxième orifice de sortie de ladite pièce de connexion.

D'autres caractéristiques et avantages de la présente invention apparaîtront à la lumière de la description détaillée des modes de réalisation qui va suivre, en référence aux figures 1 à 4 :
- la figure 1 représente une vue d'une descente d'un dispositif unitaire de séparation 1 en vue de son accostage et connexion sur une structure support 10 reposant au fond de la mer et sur laquelle deux dispositifs unitaires de séparation 1 sont déjà connectés, les différentes pièces de connexion 6 étant reliées à un dispositif de division de flux 12 alimenté par une conduite d'alimentation en pétrole brut 13 reliée à une tête de puits 18, et
- la figure 1A représente en vue de dessus une installation modulaire comportant une structure support 10 reposant au fond de la mer sur laquelle sont connectés huit dispositifs unitaires de séparation 1 et,

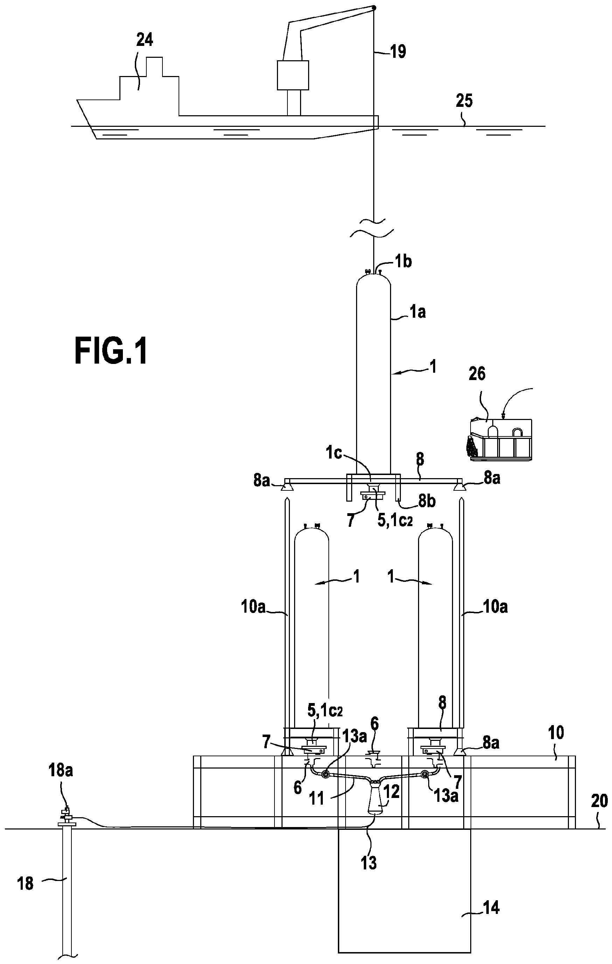

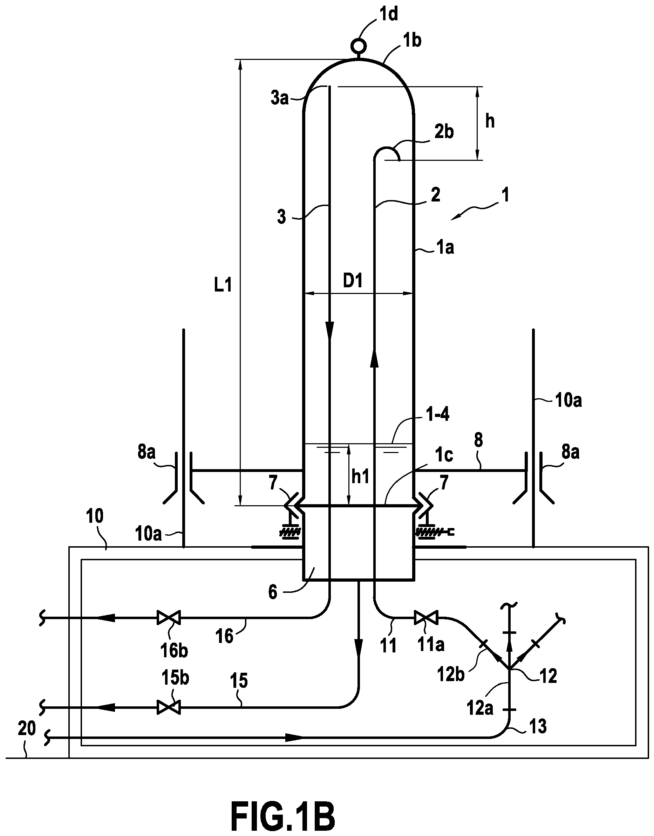

- la figure 1B représente une vue schématique d'une installation de séparation liquide-gaz sous-marine selon l'invention montrant un unique dispositif de séparation unitaire dont lesdites première conduite interne 2 d'amenée de fluide polyphasique et deuxième conduite interne 3 d'évacuation de gaz qui sont schématisées côte à côte et non pas coaxialement comme selon l'invention, ceci afin de mieux les différencier et montrer les sorties différenciées des conduite externe d'alimentation en fluide polyphasique 13 d'une part, et conduite externe d'évacuation de liquide 15 et conduite externe d'évacuation de gaz 16 coopérant avec des vannes 11a, 15b et 16b respectivement, et

- la figure 2 représente une vue en coupe longitudinale d'un dispositif unitaire de séparation gaz-liquide 1 selon la présente invention comprenant desdites première conduite interne 2 d'amenée de fluide phasique et dite deuxième conduite interne 3 d'évacuation de gaz disposées coaxialement et connectées à leurs bases à une pièce de connexion 6, et
- la figure 2A est une vue montrant la sortie et l'enroulement de la partie supérieure 2b de ladite première conduite interne à l'extérieur et autour de ladite deuxième conduite interne, et
- la figure 2B est une vue schématique en coupe horizontale de la figure 2A en vue de dessus au-dessus de la buse 2c de sortie du fluide à l'extrémité supérieure 2b de la première conduite d'amenée de fluide 2, et
- la figure 3 représente une vue en coupe axiale verticale la pièce de connexion coaxiale à trois voies 6 selon l'invention connectée via des joints annulaires 7-1, 7-2, 7-3 à la partie inférieure tubulaire 1c-2 de la paroi de fond 1c de l'enceinte 1 de la figure 2, et
- la figure 4 représente une vue en perspective d'un dispositif de division 12 de flux de fluide polyphasique comportant six orifices supérieurs de sorties 12b1 à 12b6, et
- la figure 4A représente une vue en coupe selon un plan axial médian vertical de la pièce de division 12 de la figure 4.

La structure support principale 10 repose au fond de la mer 20 en étant fixée à une embase reposant au fond de la mer 20 ou une ancre à succion 14 enfoncée au fond de la mer, cette structure support principale 10 est constituée d'un châssis formé de poutres en treillis.

La structure support principale 10 est disposée à proximité d'un puits de pétrole 18 équipé d'une tête de puits 18a reliée par une conduite d'arrivée de pétrole brut 13 acheminant le pétrole brut depuis la tête de puits jusqu'à ladite structure support 10.

Ladite structure support 10 supporte :
- une pluralité de tiges verticales de guidage 10a formant lesdits deuxièmes éléments de guidage, et
- une pluralité de pièces de connexion coaxiales à trois voies 6, et
- au moins un dispositif de division de flux 12, et
- des vannes de fermeture/ouverture desdites conduites externes suivantes : une vanne 11a contrôlant l'arrivée de fluide polyphasique en amont de ladite pièce de connexion 6, une vanne 15b contrôlant l'évacuation du liquide au sein de la conduite externe d'évacuation de liquide 15, et une vanne 16b de contrôlant l'évacuation du gaz au sein de la conduite externe d'évacuation de gaz 16, et
- une pompe d'export 17 pour l'évacuation de liquide via la conduite externe d'évacuation de liquide 15.

Ladite structure support principale 10 supporte en outre avantageusement des portions de conduites connectées ou aptes à être connectées aux extrémités desdites conduite externe d'arrivée de fluide polyphasique 13, conduite externe d'évacuation de liquide dégazé 15, et conduite externe d'évacuation de gaz 16, lesdites portions de conduites étant reliées directement ou indirectement aux orifices tubulaires latéraux 6b1 et 6c1 et orifice tubulaire inférieur central 6a1 de la pièce de connexion 6 décrits ci-après.

Le dispositif de séparation unitaire 1 tel que représenté sur les figures comprend une enceinte la dont la paroi comprend une partie courante cylindrique à section circulaire surmontée d'un fond bombé, comme par exemple une calotte sphérique, et se termine à son extrémité inférieur par une paroi de fond 1c comprenant une partie supérieure en forme d'entonnoir 1c1 et une partie inférieure cylindrique 1c-2 de plus petit diamètre délimitant ou se prolongeant par une pièce formant lesdits premier, deuxième et troisième orifices tubulaires coaxiaux 5a, 5b, 5c décrits ci-après.

La paroi cylindrique de l'enceinte la est équipée à l'extérieur d'un châssis 8 supportant desdits premiers éléments de guidage 8a définissant des orifices délimités en partie inférieure par des parois évasées en entonnoir pour faciliter leur traversée par les tiges de guidage 10a de la structure support principale 10 pour le guidage de l'enceinte la lorsqu'on la descend depuis le navire 24 en surface 25 à l'aide d'un câble 19 et éventuellement d'un ROV 26 (robot sous-marin opéré par télécommande à distance).

Le châssis 8 comprend des pieds 8b permettant de stabiliser mécaniquement le dispositif unitaire 1 reposant sur la structure support principale 10 et/ou de réaliser sa fixation sur la structure support principale 10 après accostage et connexion à la pièce de connexion 6 telle que décrit ci-après. Les éléments de guidage complémentaires 8a et 10a peuvent également servir à la fixation du dispositif unitaire 1 après accostage sur la structure support principale 10 et fixation à la pièce de connexion 6.

Lesdits premiers éléments de guidage 10a sont positionnés par rapport aux pièces de connexion 6 fixées sur la structure support 10 de telle manière que lorsque l'enceinte 1 est descendue pour être accostée sur la structure support principale 10 en faisant coopérer lesdits premier et deuxième moyens complémentaires de guidage 8a et 10a, la partie inférieure tubulaire 1c-2 de la paroi de fond 1c et/ou la pièce renfermant desdits premier, deuxième et troisième orifices coaxiaux 5a, 5b et 5c, décrits ci-après, ceux-ci arrivent à la verticale et en coïncidence avec les extrémités supérieures des premier, deuxième et troisième conduits 6a, 6b et 6c respectivement de la pièce de connexion 6 décrits ci-après.

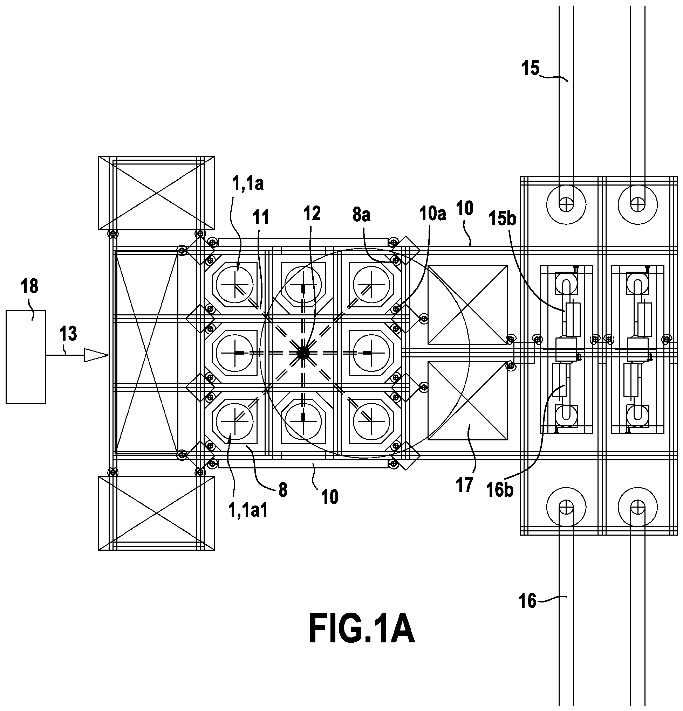

Sur la figure 1A, on a représenté huit enceintes la disposées parallèlement verticalement, disposées en carré avec trois enceintes par côté, une pièce de division de flux 12 étant disposée dans l'axe central du carré en contre-bas.

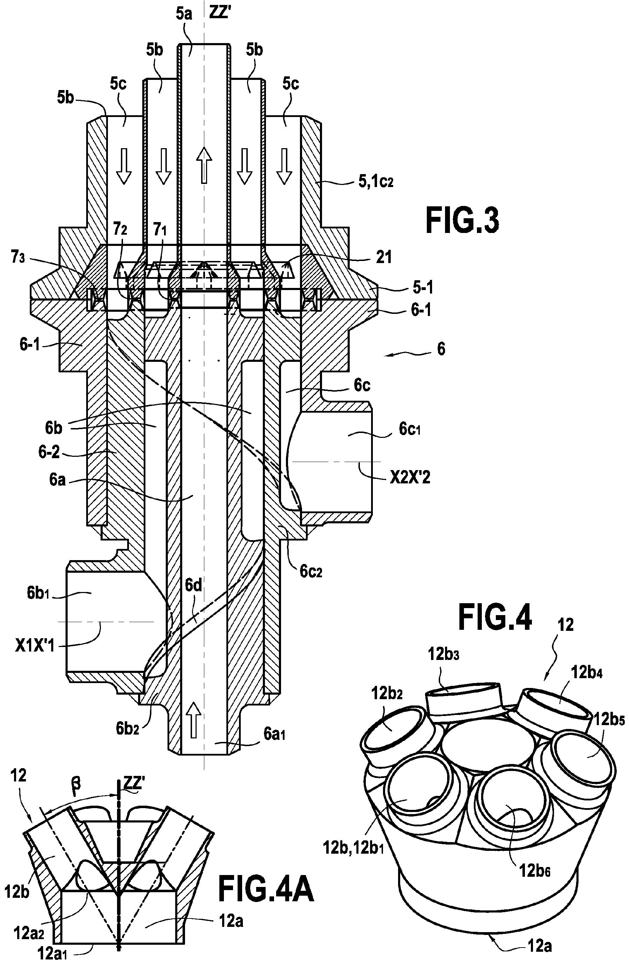

Sur la figure 4, on a représenté une pièce de division de flux 12 constituée par :
- un unique orifice tubulaire principal inférieur d'alimentation 12a disposé verticalement lorsqu'il est fixé sur la structure support principale 10, dont l'extrémité inférieure ouverte 12a1 est raccordée à l'extrémité d'une conduite externe d'alimentation en fluide polyphasique 13, et
- une pluralité d'orifices secondaires tubulaires supérieurs de sortie 12b disposés de manière inclinée, comprend ici six orifices 12b1 à 12b6, aptes à alimenter seulement six enceintes 1a, mais elles pourraient contenir huit orifices secondaires tubulaires de sortie inclinés 12b pour alimenter huit enceintes comme représentées en figure 1A.

Les extrémités supérieures ouvertes desdits orifices tubulaires secondaires de sorties 12b1 à 12b6 sont connectées à respectivement à une pluralité d'éléments de conduites de transfert 11, ces dernières étant connectées à leur autre extrémité à l'extrémité inférieure des premiers conduits centraux 6a des différentes pièces de connexion 6 des différents dispositifs unitaires de séparation de fluides 1 fixés sur la structure support principale 10.

Sur la figure 1B, la conduite 13 est représenté comme étant coudé pour se connecter dans la direction axiale verticale de l'orifice tubulaire inférieur d'alimentation 12a de la pièce de division de flux 12 représentée figure 4, ceci afin d'en faciliter la représentation. Toutefois, en réalité, on évite de former un coude dans la conduite externe d'alimentation de fluide polyphasique 13 alimentant la pièce de division 12.

La pièce de division de flux 12 est en effet disposée en hauteur par rapport au fond de la mer 20 pour que l'extrémité de la conduite externe d'alimentation en fluide polyphasique 13 connectée à l'extrémité inférieure 12a1 de la pièce 12 présente un rayon de courbure suffisant pour éviter le fractionnement des phases du fluide polyphasique qu'elle véhicule.

De même l'inclinaison d'un angle β = 30° desdits orifices secondaires tubulaires supérieurs de sortie 12b1 à 12b6 ainsi que la longueur et la forme éventuellement à double incurvation avec un point d'inflexion médian des éléments de conduites de transfert 11 contribuent à permettre de respecter des rayons de courbure dans les éléments de conduites de transfert 11 pour éviter là encore le fractionnement des phases liquides et gazeuses du fluide polyphasique.

Les diamètres des différents orifices secondaires tubulaires supérieurs de sortie 12b1 à 12b6 sont inférieurs à celui de l'orifice principal inférieur 12a, mais la somme des diamètres des différents orifices secondaires 12b est égale à celle de l'orifice principal inférieur 12a, de sorte que les vitesses d'écoulement en entrée et en sortie du distributeur soient toutes identiques.

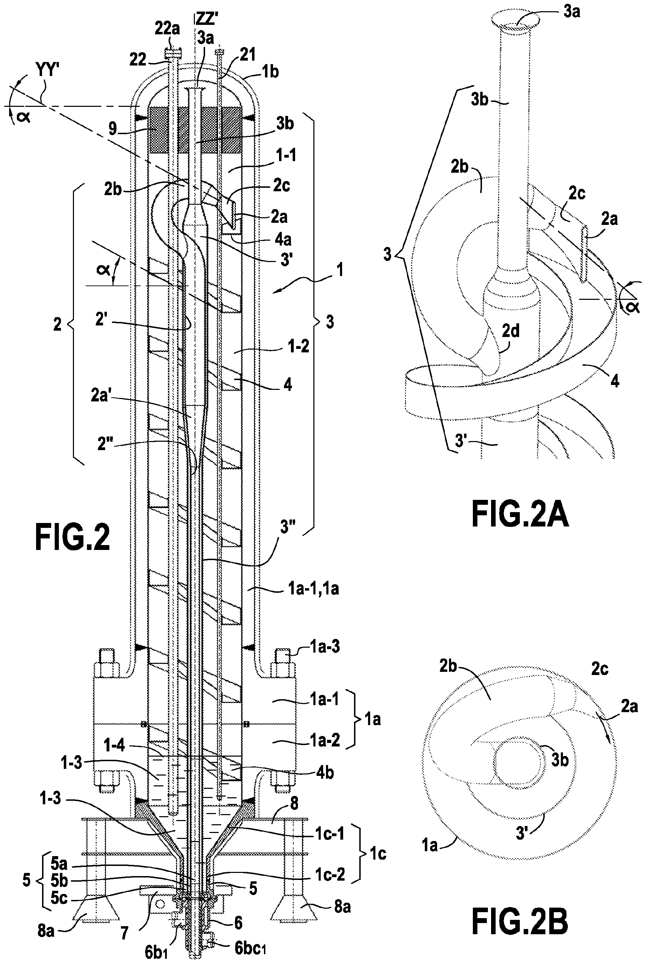

Sur la figure 2, on a représenté un dispositif de séparation unitaire selon la présente invention dont l'enceinte prend une paroi la est formée de 2 parties, à savoir :
- un partie supérieure la-1 constituée de la partie courante cylindrique à section circulaire surmontée d'une calotte sphérique 1b, et
- une partie inférieure 1a-2 dont la face supérieure forme une bride de fixation à l'aide de vis 1a-3 avec la face inférieure de la partie supérieure 1a-1, fixées ensemble à l'aide de vis 1a-3.

La partie inférieure 1a-2 de la paroi de l'enceinte définie à son extrémité inférieure une paroi de fond 1c en forme d'entonnoir 1c-1 se prolongeant à son extrémité inférieure par une partie cylindrique 1c-2 de diamètre D2 réduit par rapport au diamètre D1 de la partie cylindrique de l'enceinte 1a, D2 étant par exemple inférieur à 1/4 de D1, et D1 étant par exemple de 0.5 à 3 mètre(s) pour une longueur L1 d'enceinte de 5 à 30 mètres.

La paroi cylindrique 1c-2 délimite un orifice annulaire d'évacuation du liquide contenu à l'intérieur de ladite enceinte, dénommé troisième orifice annulaire 5c.

Une première conduite interne 2 est disposée, dans sa partie courante, à l'exception de sa partie supérieure coudée 2b décrite ci-après, verticalement et axialement selon l'axe ZZ' au centre de ladite enceinte. Son extrémité inférieure se termine ou se prolonge par un premier orifice central 5a traversant coaxialement la partie inférieure cylindrique 1c-2 de la paroi de fond.

A environ mi-hauteur de l'enceinte, la première conduite interne 2 comporte un évasement 2a' puis une section de première conduite de plus large diamètre 2' se terminant à son extrémité supérieure par une spire de retournement ou boucle à incurvations multiples en forme de col de cygne 2b de telle sorte que la buse 2c de sortie à l'extrémité supérieure ouverte 2a de la première conduite interne 2 arrive à proximité de et parallèlement à la surface interne de la paroi cylindrique la comme décrit ci-après. La buse 2c présente une paroi latérale évasée de sorte que son ouverture 2a est plus large que le diamètre de l'extrémité de la boucle de la partie supérieure 2b de la première conduite interne à laquelle ladite buse 2c est adaptée.

La fonction de l'évasement 2a' et de l'élargissement de la section 2' de la première conduite par rapport à la portion inférieure 2" de conduite interne de plus petit diamètre est de réduire la vitesse du fluide polyphasique dans la première conduite interne. L'évasement de la paroi latérale de la buse 2c a également pour effet de réduire la vitesse du fluide en sortie de la conduite 2.

Sur les figures 2A et 2B on a représenté le profil incurvé en section horizontale de la partie supérieure 2b et de la buse 2c à l'extrémité de la partie supérieure 2b de la portion coudée de la première conduite interne 2 à l'extérieur et autour de la partie supérieure axiale 3b de la deuxième conduite 3 se terminant par l'ouverture 3a.

Ce profil incurvé à profil parallèle à celui de la paroi cylindrique la de l'enceinte, combiné à un ajutage de forme rectiligne vertical de l'ouverture supérieure 2a à section aplatie à l'extrémité de la buse 2c a pour effet de produire un écoulement du fluide en sortie de la première conduite 2 en forme de lame tangentielle à la paroi interne de la paroi cylindrique la de l'enceinte et ainsi de minimiser la déstructuration du fluide polyphasique pour éviter le fractionnement des bulles de gaz néfaste à la séparation ainsi que la projection de gouttes de liquides qui pourraient être entrainées dans l'ouverture de sortie du gaz. Ainsi le fluide polyphasique se trouve plaqué au niveau de la paroi interne cylindrique de l'enceinte en sortie de la buse 2c, par les forces centrifuges qui résultent de l'écoulement tourbillonnaire contre la paroi cylindrique de l'enceinte.

Ensuite, la partie liquide du fluide polyphasique va descendre par gravité dans la partie intermédiaire 1-2 de l'enceinte jusque dans la partie inférieure 1-3 laquelle va se remplir de liquide sur une certaine hauteur h1, avant et/ou pendant son écoulement par le troisième orifice annulaire d'évacuation de liquide 5c.

La partie gazeuse du fluide polyphasique, plus légère, montera vers la partie supérieure 1-1 de l'enceinte, en sortie de la buse 2c pour être évacuée par l'extrémité supérieure 3a d'une deuxième conduite interne 3 d'évacuation de gaz décrite ci-après.

Pour l'évacuation du liquide, dans un mode préféré de réalisé, représenté sur la figure 2, l'enceinte comporte une gouttière hélicoïdale 4 fixée contre la surface interne de la paroi cylindrique de l'enceinte la dont l'extrémité supérieure 4a arrive en contre-bas de la sortie de buse 2c et dont l'extrémité inférieure 4b arrive juste au-dessus de la partie inférieure en entonnoir 1c-1 de la paroi de fond de l'enceinte.

Le pas de l'hélice de la gouttière hélicoïdale 4 est tel que celle-ci est inclinée d'un angle α par rapport à l'horizontale sensiblement identique à l'angle d'inclinaison vers le bas de la direction YY' du flux de fluide sortant de l'ouverture 2a de la buse 2c.

Une deuxième conduite interne 3 servant à l'évacuation du gaz s'étend verticalement et axialement au centre de l'enceinte la disposée dans sa partie inférieure coaxialement autour de la partie médiane 2' de plus grand diamètre et la partie inférieure 2" de plus petit diamètre de la première conduite interne 2. La deuxième conduite interne 3 comporte donc une partie médiane de plus grand diamètre 3' de façon à suivre l'élargissement de la partie médiane 2' de la première conduite 2, afin que la largeur de l'espace annulaire entre la première conduite interne 2 et la deuxième conduite interne 3 reste sensiblement identique.

L'extrémité inférieure de la deuxième conduite interne 3 définie ou se prolonge par un deuxième orifice tubulaire nommé deuxième orifice annulaire 5b d'évacuation de gaz coaxialement et autour du premier orifice central 5a à l'extrémité inférieure de ladite deuxième conduite interne 2.

Ledit troisième orifice annulaire 5c à l'extrémité inférieure de la partie inférieure cylindrique 1c-2 de la paroi de fond 1c délimite une espace annulaire autour de la deuxième conduite interne 3 pour l'évacuation du liquide de la partie inférieure 1-3 de l'enceinte.

L'extrémité supérieure 3a de la deuxième conduite interne 3 arrive à proximité du couvercle de l'enceinte constitué par la calotte sphérique 1b à une hauteur h de 1 à 2 mètre(s) au-dessus de l'ouverture 2a de la buse 2c à l'extrémité supérieure de la première conduite interne 2.

Dans la partie supérieure 1-1 de l'intérieur de l'enceinte sur le chemin du gaz, entre l'ouverture supérieure 2a de la première 2a de la première conduite interne 2 et l'ouverture supérieure 3a de la deuxième conduite interne 3, on dispose d'un dispositif de coalescence 9 de gouttelettes de liquide entraînées par le gaz qui permet, en combinaison avec la disposition supérieure de l'ouverture de l'extrémité supérieure 3a de la deuxième conduite interne 3, d'éviter que de fines gouttelettes de liquide ne soient entraînées avec la phase gazeuse évacuée par la deuxième conduite interne 3.

Le nettoyage de ce dispositif de coalescence 9 est rendu possible par la possibilité de déconnexion des deux parties la-1 et 1a-2 de l'enceinte lorsque celle-ci aura été remontée pour maintenance en surface avec les équipements qui lui sont solidaires.

Ladite enceinte est également traversée par des capteurs de pression et capteur de niveau de liquide 20-21, 22. On peut mettre plus particulièrement en oeuvre des capteurs de niveau nucléique constitués d'une barre émettrice de rayons et d'une ou plusieurs barres de mesures disposées verticalement au sein de l'enceinte dont la fonction connue est de déterminer le profil de densité des fluides sur toute la hauteur de l'enceinte pour pouvoir en déduire le niveau de l'interface 1-4 gaz-liquide au sein de l'enceinte. Ces barres sont logées dans des fourreaux étanches et résistants à la pression et traversant le sommet de l'enceinte. Des bouchons étanches 22a opérables par un robot sous-marins 26 ferment les tubes fourreaux desdites barres de détection et peuvent être ouvert en vue de la récupération desdites barres de détection pour maintenance en surface. Dans un autre mode de réalisation, les fourreaux des différentes barres de capteurs 21, 22 traversent la paroi de fond 1c de l'enceinte et ne sont pas liées à la partie supérieure de l'enceinte de sorte que la récupération des barres de détection se fait alors par déconnexion et récupération de l'enceinte complète 1.

L'enceinte 1 de séparation comporte des points de levage préférentiellement en partie haute qui peuvent être des oreilles de levage 1d intégrées à la paroi de l'enceinte ou des embrèvements ou bossages pratiqués dans la paroi de l'enceinte pour servir de portée à une pince de levage venant coiffer la partie supérieure de la paroi de l'enceinte. Il est aussi possible de placer l'enceinte étanche dans une charpente métallique qui portera les points de levage.

Sur la figure 3, on a représenté la partie inférieure 1c-2 de la paroi de fond qui se termine par une pièce intermédiaire 5 soudée à l'extrémité inférieure de la partie inférieure cylindrique 1c-2 de la paroi de fond 1c. Cette pièce 5 de l'extrémité inférieure de la partie cylindrique 1c-2 forme et délimite un premier orifice central tubulaire 5a d'alimentation en fluide de la première conduite interne 2, un deuxième orifice annulaire 5b coaxial délimitant un espace annulaire autour du premier orifice tubulaire 5a en prolongement de l'extrémité inférieure de la deuxième conduite interne 3, espace annulaire 5b par lequel le gaz provenant de l'extrémité supérieure 3a de la deuxième conduite interne 3 est évacué à l'extérieure de l'enceinte 1, et un troisième orifice tubulaire annulaire 5c également coaxial délimitant un espace annulaire autour du deuxième orifice tubulaire annulaire 5b, ledit troisième orifice annulaire 5c étant délimité par la paroi externe de la pièce 5 ou de la partie inférieure de la partie cylindrique 1c-2.

L'extrémité inférieure de cette pièce inférieure 5 forme une bride de fixation 5-1 apte à être fixée de manière réversible par des mâchoires de fixation 7 (non représentés sur la figure 3) avec l'extrémité supérieure 6-1 de la pièce de connexion 6. Des joints d'étanchéité métalliques coaxiaux 7-1, 7-2, 7-3, sont intercalés entre l'extrémité inférieure 5-1 de la pièce 5 et l'extrémité supérieure 6-1 de la pièce de connexion 6.

La pièce de connexion 6 est réalisée en trois parties 6-1, 6-2 et 6b-2 soudées l'une à l'autre. Une partie interne 6-2 de la pièce 6 comprend un premier conduit central 6a disposé axialement, verticalement. Ce premier conduit central 6a est en prolongation et continuité dudit premier orifice tubulaire 5a après connexion de la pièce 6 par les mâchoires de fixation 7 à l'extrémité inférieure de la pièce 5.

L'extrémité inférieure 6a-1 du premier conduit central 6a de la pièce de connexion 6 est connectée à l'extrémité d'un élément de conduite de transfert 11 ou directement à l'extrémité d'une conduite externe d'alimentation en fluide polyphasique 13.

Autour du premier conduit central 6a, la pièce interne 6-2 de la pièce de connexion 6 forme un deuxième conduit annulaire 6b coaxial au premier conduit 6a, et dont l'extrémité supérieure communique avec le deuxième orifice annulaire 5b d'évacuation de gaz de la pièce 5. Le deuxième conduit annulaire 6b est fermé à son extrémité inférieure 6b-2 et comporte un premier orifice latéral de sortie de gaz, d'axe X₁X₁ perpendiculaire à l'axe ZZ' de la pièce de connexion 6, permettant le raccordement à l'extrémité d'une conduite externe d'évacuation de gaz 16.

Autour du deuxième conduit annulaire 6b, la partie externe 6-1 de la pièce de connexion 6 délimite et forme avec la pièce interne 6-2, un troisième conduit annulaire 6c d'évacuation de liquide dont l'extrémité supérieure communique avec le troisième orifice annulaire 5c de la pièce 5 pour permettre l'évacuation de liquide. Le troisième conduit d'évacuation 6c de la pièce de connexion 6 est fermé à son extrémité inférieure 6c-2 et comporte un deuxième orifice latéral de sortie de liquide 6c-1, d'axe X₂X₂' perpendiculaire à l'axe ZZ', et connecté à l'extrémité d'une conduite externe d'évacuation de liquide 15.

Les fonds des espaces annulaires 6b et 6c peuvent être de forme hélicoïdale 6d dans le but de recueillir et de forcer l'écoulement de particules solides de sable pouvant être véhiculées avec la partie liquide du fluide polyphasique pour éviter ainsi toute accumulation de particules solides (sable...) qui risquerait de boucher les conduites.

Le pétrole brut arrive sous la tête de puits 18a à haute pression, par exemple 100 à 200 bars. La tête de puits 18a peut être équipée d'un dispositif de baisse de pression et d'une vanne automatisée de contrôle de débit pilotée depuis la surface et reliée à la conduite externe d'alimentation en pétrole 13 qui arrive à pression réduite, par exemple 20 bars, au niveau de la pièce de division de flux 12. Le ralentissement du fluide en amont du séparateur est fait pour éviter des écoulements trop violents en entée de l'enceinte et ainsi éviter de perturber la séparation.

Le pétrole brut pénètre dans l'enceinte via la première conduite interne 2 et se déverse et sépare ses phases liquide et gazeuse à l'extrémité supérieure 2a de la première conduit La chute de pression se fait à la tête de puits, la pression est à peu près constante dans la station de séparation. La partie liquide remplit le fond de l'enceinte jusqu'à un niveau 1-4 dont la hauteur est contrôlée par les capteurs de niveau 21-22 et régulée par la pompe d'export 17 d'évacuation de liquide par la conduite externe15.

L'extrémité supérieure ouverte 3a de la deuxième conduite interne 3 est disposée à une hauteur h de 1 à 2 mètre(s) suffisante au-dessus de l'extrémité de l'ouverture 2a de la deuxième conduite 2, pour que des projections de bouchons de pétrole ou de parties liquides de pétrole provoquées par l'arrivée brutale de poches de gaz importantes en sortie 2a de la conduite 2 n'atteigne pas l'extrémité supérieure 3a de la deuxième conduite 3.

Le pétrole liquide dégazé, récupéré en partie basse de l'enceinte est dirigé via l'orifice de sortie 6-1 de la pièce de connexion 6 vers la conduite externe d'évacuation de liquide 15 peut être expédié vers un support flottant en surface ou un séparateur secondaire eau/huile au fond de la mer de manière à ce que l'huile soit expédiée vers la surface, l'eau étant soit réinjectée dans un puits similaire au puits 18, ou simplement relâchée en mer, dans la mesure où elle présente une propreté acceptable, c'est-à-dire une quantité suffisamment faible de particules résiduelles de pétrole brut. L'évacuation de liquide peut être contrôlée grâce à une pompe d'export 17.

De même, le gaz évacué par la conduite externe d'évacuation de gaz 16 peut être expédié vers la surface ou ré-comprimé au niveau du fond de la mer puis réinjecté dans un puits similaire au puits 18.

Plus particulièrement, on envoi ledit pétrole brut à l'extrémité inférieure de ladite première conduite interne, de préférence telle que le différentiel de pressions ΔP = P1-P0, P0 étant la pression d'arrivée de la ligne de gaz au FPSO en surface, soit supérieur aux pertes de charges dans la conduite externe d'évacuation de gaz depuis ledit premier orifice latéral jusqu'à la surface. Ceci permet de faire remonter le gaz en surface sans matériel complémentaire et/ou sans apporter d'énergie complémentaire externe notamment sans la mise en oeuvre d'un compresseur.

De préférence, on contrôle le débit d'arrivée de fluide brut en amont de ladite pièce de connexion par une vanne de contrôle de débit et/ou on contrôle le débit d'évacuation du fluide dégazé en aval de ladite pièce de connexion 6 par une vanne de contrôle de débit et/ou par la vitesse de ladite pompe d'export 17 en fonction des mesures au moins d'un dit dispositif de contrôle du niveau du fluide au sein de ladite enceinte de manière à ce que le niveau de liquide au fond de l'enceinte reste suffisamment éloigné des entrées / sorties du séparateur.

Plus particulièrement, ladite structure support est installée au fond de la mer, à une profondeur de 100 à4000 m et l'on établit une pression P1 de 10 à 50 bars (10 x10⁵ à 50x10⁵ Pa), de préférence 20 bars (20x10⁵ Pa) au sein de ladite enceinte.

De préférence, ladite enceinte est isolée thermiquement .Ce mode de réalisation permet de maintenir le fluide de pétrole brut à la température élevée de 40 à 100°C, voire plus, à laquelle il sort de la tête de puits, et faciliter ainsi la remontée en surface du fluide, en évitant la solidification des paraffines ou la formation d'hydrates de gaz par refroidissement du pétrole brut en dessous de 30-35°C, pouvant créer des bouchons et des blocages au sein de la conduite interne 2. En cas d'arrêt de la production, l'isolation thermique de l'enceinte permet aussi de maintenir la température interne de l'enceinte le plus longtemps possible en dessus de la température critique de formation d'hydrates de gaz, laissant ainsi le temps aux opérateur d'effectuer les opérations de préservation nécessaires pour palier ce risque.

La possibilité de déposer et connecter des dispositifs unitaires de séparation 1 additionnels sur la structure support principale 10 reposant au fond de la mer depuis un navire 24 en surface 25, permet d'adapter les capacités de séparation du pétrole brut au fond de la mer au cours du temps et permet également, avantageusement d'assurer la maintenance en surface par déconnexion et levage des dispositifs unitaires de séparation 1 depuis un navire 24 en surface 25.

Compte tenu de la possibilité de mettre en oeuvre des enceintes de relativement plus petites tailles compte tenu de leur plus grand nombre, la manutention des enceintes la depuis la surface, peut être réalisée par des bateaux de taille standard utilisés pour l'assistance et la maintenance d'installations pétrolières offshore, sans avoir recours à des capacités de levage trop importantes.

Une caractéristique avantageuse essentielle de l'invention consistant dans la disposition coaxiale des amenées de fluide et sorties de phase gazeuse et phase liquide à l'extrémité inférieure de l'enceinte la via une pièce de connexion coaxiale à trois voies 6 facilite la mise en place et connexion des dispositifs unitaires de séparation 1 au niveau de la structure de support principale 10 au fond de la mer, ainsi que la maintenance du dispositif unitaire 1, comme explicité précédemment.

En effet, la disposition coaxiale des différentes conduites internes d'amenée de fluide et d'évacuation séparée des phases gazeuse et liquide permet que les joints 7-1, 7-2, 7-3 d'étanchéité, en l'espèce des joints métalliques, entre l'extrémité inférieure des orifices 5a, 5b, 5c de la paroi de fond 1c de l'enceinte 1 et les différents conduits 6a, 6b, 6c de la pièce de connexion 6 à son extrémité supérieure, reste en équipression s'agissant des deux joints internes 7-1 et 7-2 évitant ainsi des dégradations au niveau desdits joints en cas de pressurisation ou dépressurisation de l'enceinte lors de ces déconnexions ou maintenances diverses, comme explicité précédemment.

## Revendications

1. Installation sous-marine modulaire de séparation liquide/gaz de deux phases respectivement liquide et gazeuse d'un fluide, notamment les phases liquide et gazeuse d'un pétrole brut, comprenant :
(a) une structure support principale (10) reposant et/ou ancrée au fond de la mer (20) sur laquelle sont connectés ou aptes à être connectés de manière réversible une pluralité de dispositifs unitaires (1) de séparation liquide/gaz, et
(b) au moins un dispositif unitaire (1) de séparation liquide/gaz fixé sur ladite structure support principale (10), chaque dit dispositif unitaire (1) de séparation liquide/gaz comprenant une enceinte unique comprenant une paroi (1a) étanche résistante à la pression du fond de la mer et à la pression interne dudit fluide disposée selon un axe de révolution vertical (ZZ'), ladite enceinte renfermant :
b1) une première conduite interne (2) d'amenée du fluide polyphasique remontant au sein de ladite enceinte depuis son extrémité inférieure comprenant ou coopérant avec un premier orifice (5a) traversant une partie de paroi dénommée paroi de fond (1c) de l'enceinte, jusqu'à son extrémité supérieure ouverte (2a) débouchant en partie supérieure (1-1) de l'enceinte, et
b2) une deuxième conduite interne d'évacuation de gaz (3) s'étendant au sein de ladite enceinte depuis son extrémité supérieure ouverte (3a), de préférence disposée plus haut que ladite ouverture supérieure (2a) de la première conduite, jusqu'à son extrémité inférieure comprenant ou coopérant avec un deuxième orifice (5b) traversant la paroi de fond (1c) de l'enceinte, et
b3) un troisième orifice (5c) traversant ladite paroi de fond de l'enceinte autour desdits premier et deuxième orifices (5a, 5b) de la paroi de fond de l'enceinte, et
c) une pluralité de pièces de connexion à 3 voies (6) fixées sur ladite structure support(10), dont au moins une dite pièce de connexion connectée à une dite enceinte (1), chaque dite pièce de connexion comprenant :
c1) un premier conduit de connexion (6a) dont une extrémité supérieure est connectée ou apte à être connectée à un dit premier orifice (5a) de la paroi de fond de ladite enceinte, ledit premier conduit de connexion comprenant un premier orifice de sortie (6a1) connecté ou apte à être connecté à une conduite externe d'alimentation en dit fluide polyphasique (13) au fond de la mer ou un élément de conduite (11) relié à l'extrémité d'une conduite externe d'alimentation en dit fluide polyphasique (13) au fond de la mer (20), et
c2) un deuxième conduit de connexion (6b) dont une extrémité supérieure est connectée ou apte à être connectée à un dit deuxième orifice (5b) de la paroi de fond de ladite enceinte, ledit deuxième conduit de connexion (6b) comprenant un deuxième orifice de sortie (6b1) connecté ou apte à être connecté à une conduite externe d'évacuation de gaz (16), et
c3) un troisième conduit de connexion (6c) disposé autour desdits premier et deuxième conduits de connexion (6a,6b) à son extrémité supérieure connectée ou apte à être connectée à un dit troisième orifice (5c) de la paroi de fond de ladite enceinte, ledit troisième conduit de connexion (6c) comprenant un troisième orifice de sortie (6c1) connecté ou apte à être connecté à une conduite externe d'évacuation de liquide (15).

2. Installation modulaire selon la revendication 1, **caractérisée en ce que** ledit deuxième orifice (5b) de la paroi de fond de l'enceinte est un deuxième orifice annulaire disposé coaxialement autour dudit premier orifice (5a) tubulaire de la paroi de fond de l'enceinte, et ledit troisième orifice (5c) de la paroi de fond de l'enceinte est un troisième orifice annulaire disposé coaxialement autour desdits premier et deuxième orifices (5a, 5b) de la paroi de fond de l'enceinte, et ladite pièce de connexion à trois voies (6) est une pièce de connexion à trois voies coaxiales fixée verticalement sur ladite structure support (10) comprenant :
c1) un premier conduit de connexion (6a) disposé verticalement et dont ledit premier orifice de sortie (6a1) est constitué par l'extrémité inférieure axiale dudit premier conduit de connexion (6a), et
c2) un deuxième conduit de connexion (6b), disposé coaxialement et autour dudit premier conduit à son extrémité supérieure, connecté ou être apte à être connecté verticalement à un dit deuxième orifice annulaire (5b) de ladite paroi de fond de l'enceinte, comprenant un dit deuxième orifice de sortie (6b1) latéral, et
c3) un troisième conduit de connexion (6c) disposé coaxialement autour desdits premier et deuxième conduits de connexion (6a, 6b) à son extrémité supérieure, connecté ou apte à être connecté verticalement à un dit troisième orifice annulaire (5c) de ladite paroi de fond de l'enceinte, comprenant un dit troisième orifice de sortie latéral (6c1).

3. Installation modulaire selon la revendication 2, **caractérisée en ce que** ladite structure support (10) reposant au fond de la mer supporte au moins un dispositif de division et distribution (12) du fluide polyphasique présentant un unique orifice tubulaire principal d'alimentation axial (12a) disposé de préférence verticalement, dont l'extrémité inférieure ouverte (12a1) est connectée ou connectable à l'extrémité d'une conduite externe d'alimentation en dit fluide polyphasique (13) au fond de la mer (20), et dont l'extrémité supérieure axiale ouverte (12a2) communique avec une pluralité d'orifices secondaires tubulaires de sortie (12b, 12b1 à 12b6) inclinés par rapport à ladite direction axiale, de même diamètre et inclinés d'un même angle (β) et disposés symétriquement et régulièrement par rapport et autour de ladite direction axiale, lesdits orifices secondaires tubulaires de sortie (12b1 à 12b6) étant connectés ou aptes à être connecté à une pluralité d'éléments de conduite de transfert (11) de fluide d'alimentation connectés ou aptes à être connectés respectivement à une pluralité de dits premiers conduits (6a) de dites pièces de connexion (6) connectées ou aptes à être connectées aux extrémités inférieures d'une pluralité de dites enceintes (1).

4. Installation modulaire selon la revendication 3, **caractérisée en ce que** lesdites pièces de connexion (6) et dites enceintes (1) sont disposées par rapport audit dispositif de division (12), de préférence au-dessus et autour dudit dispositif de division (12), de telle sorte que les pertes de charge entre ledit dispositif de division (12) et lesdites enceintes (1) soient sensiblement identiques entres-elles, de préférence, lesdites pièces de connexion (6) et lesdites enceintes (1) étant disposées symétriquement par rapport audit dispositif de division (12) au-dessus et autour dudit dispositif de division (12).

5. Installation modulaire selon l'une des revendications 1 à 4, **caractérisée en ce que** ladite enceinte est solidaire de premiers éléments de guidage (8a) du type mâle ou de préférence femelle, disposés à l'extérieure de ladite enceinte, et ladite structure support (10) comporte des deuxièmes éléments de guidage (10a), du type femelle ou respectivement mâle, coopérant ou apte à coopérer avec lesdits premiers éléments de guidage complémentaire pour réaliser un accostage vertical d'un dit dispositif unitaire en face d'une dite pièce de connexion (6).

6. Installation modulaire selon l'une des revendications 1 à 5, **caractérisée en ce que** ladite enceinte comprend une paroi latérale (1a) cylindrique à section circulaire, dont l'extrémité supérieure est fermée par une calotte bombée de préférence sphérique (1b) et dont la paroi de fond (1c) à son extrémité inférieure est en forme d'entonnoir (1c1) se rétrécissant vers le bas pour former une paroi inférieure tubulaire verticale (1c2) délimitant ledit troisième orifice annulaire d'évacuation de liquide (5c).

7. Installation modulaire selon l'une des revendications 1 à 6, **caractérisée en ce que** ladite première conduite interne (2) d'amenée du fluide polyphasique s'étend verticalement, de préférence sensiblement dans l'axe de ladite enceinte, à l'intérieure de ladite deuxième conduite interne (3) dessous une partie supérieure (2b) de ladite première conduite interne, laquelle partie supérieure (2b) de dite première conduite interne forme une boucle de retournement, à l'extérieur de ladite deuxième conduite interne, se terminant de préférence par une buse de sortie de fluide (2c) à paroi évasée définissant une dite ouverture supérieure (2a) de ladite première conduite interne, de préférence encore à section de forme aplatie, de sorte que ladite ouverture supérieure (2a) de la première conduite débouche à proximité de la paroi latérale (1a) de l'enceinte pour que le fluide s'en écoule parallèlement à ladite paroi latérale cylindrique et orienté dans une direction (YY') inclinée (α) vers le bas, et ladite deuxième conduite interne (3) d'évacuation de gaz s'étend axialement de manière coaxiale à ladite première conduite interne dessous ladite partie supérieure (2b) de celle-ci, de préférence lesdites première conduite interne (2) et deuxième conduite interne (3) présentant des portions coaxiales (2', 3') de plus grands diamètres que leurs parties inférieures respectives (2", 3").

8. Installation modulaire selon l'une des revendications 1 à 7, **caractérisée en ce que** l'enceinte comprend une gouttière hélicoïdale (4) fixée à proximité de et/ou contre la surface interne de ladite paroi latérale de l'enceinte et dont l'extrémité supérieure est en contre bas de l'ouverture supérieure de la première conduite interne et l'extrémité inférieure arrive au-dessus dudit troisième orifice annulaire (5c).

9. Installation modulaire selon l'une des revendications 1 à 8, **caractérisée en ce que** l'enceinte renferme dans sa partie supérieure (1-1) un dispositif de filtration de gouttelettes de liquide, de préférence un dispositif de coalescence (9), sur le chemin du gaz entre l'ouverture supérieure (2a) de la première conduite interne et l'ouverture supérieure (3a) de la deuxième conduite interne.

10. Installation modulaire selon l'une des revendications 1 à 9, **caractérisée en ce qu'**elle renferme des capteurs de détection de pression et capteur de niveau de liquide (21,22) au sein de l'enceinte, de préférence un dispositif de contrôle de niveau qui est une sonde de type radar ou sonar ou un capteur de niveau nucléonique constitué d'une barre émettrice de rayons (21) et une ou plusieurs barres de mesure (22) permettant de mesurer le profil de densité du fluide sur toute la hauteur de l'enceinte.

11. Installation modulaire selon l'une des revendications 1 à 10, **caractérisée en ce que** l'enceinte est formée de deux parties d'enceinte fixées (1a-3) l'une à l'autre comprenant :
- une partie supérieure de paroi (1a-1) comprenant à son extrémité supérieure une calotte bombée, de préférence sphérique (1b), et
- une partie inférieure de paroi (1a-2) comprenant une dite paroi de fond (1c).

12. Installation modulaire selon l'une des revendications 1 à 11, **caractérisée en ce que** ladite structure support (10) comprend une pluralité de dites pièces de connexion et dites enceintes (1a) qui y sont connectées, de préférence d'au moins 4 dites pièces de connexion, de préférence disposées symétriquement.

13. Dispositif unitaire de séparation liquide/gaz de deux phases respectivement liquide et gazeuse d'un fluide, utile dans une installation modulaire tel que défini dans l'une des revendications 1 à 12, **caractérisé en ce que** ledit dispositif unitaire (1) de séparation liquide/gaz comprend une enceinte unique comprenant une paroi (1a) étanche résistante à la pression du fond de la mer et à la pression interne dudit fluide disposée selon un axe de révolution vertical (ZZ'), ladite enceinte renfermant :
1) une première conduite interne (2) d'amenée du fluide polyphasique remontant au sein de ladite enceinte depuis son extrémité inférieure comprenant ou coopérant avec un premier orifice (5a) traversant une partie de paroi dénommée paroi de fond (1c) de l'enceinte, jusqu'à son l'extrémité supérieure ouverte (2a) débouchant en partie supérieure (1-1) de l'enceinte, et
2) une deuxième conduite interne d'évacuation de gaz (3) s'étendant au sein de ladite enceinte depuis son extrémité supérieure ouverte (3a) disposée de préférence, plus haut que ladite ouverture supérieure (2a) de la première conduite, jusqu'à son extrémité inférieure comprenant ou coopérant avec un deuxième orifice (5b) traversant la paroi de fond (1c) de l'enceinte, et
3) un troisième orifice (5c) traversant ladite paroi de fond de l'enceinte coaxialement autour desdits premier et deuxième orifices (5a, 5b) de ladite paroi de fond de l'enceinte.

14. Procédé de réalisation d'une installation modulaire selon l'une des revendications 1 à 12, **caractérisé en ce qu'**on réalise les étapes successives suivantes dans lesquelles :
a) on descend un dit dispositif unitaire suspendu à un lien (19) depuis un navire (24) en surface (25), et
b) de préférence, on guide son approche d'accostage avec une dite pièce de connexion (6) fixée sur ladite structure support (10), à l'aide de premiers éléments de guidage (8a) solidaires de ladite enceinte (1) et de dits deuxièmes moyens de guidage (10a) solidaires de ladite structure support (10), lesdits deuxièmes éléments de guidage coopérant avec lesdits premiers éléments de guidage, et
c) on connecte ladite enceinte à une dite pièce de connexion, de manière déconnectable, à l'aide d'une bride de fixation (7) et de joints d'étanchéité coaxiaux (7-1, 7-2 et 7-3) entre lesdits premier, deuxième et troisième orifices (5a, 5b, 5c) traversant la paroi de fond (1c) de l'enceinte et lesdits premier, deuxième et respectivement troisième conduits de connexion (6a, 6b, 6c) de ladite pièce de connexion.

15. Procédé de séparation des deux phases liquide et gazeuse d'un pétrole brut à l'aide d'une installation selon l'une des revendications 1 à 12, **caractérisé en ce que** l'on réalise les étapes suivantes, dans lesquelles :
1) on envoie le pétrole brut, par l'intermédiaire d'une conduite d'arrivée (13), jusqu'audit premier orifice (5a) de ladite paroi de fond de l'enceinte via et à travers ledit premier conduit (6a) d'une dite pièce de connexion (6), à une pression réduite P1, inférieure à la pression statique au fond de la mer P2, et
2) le pétrole brut remonte au sein de ladite première conduite interne (2) de l'enceinte, puis s'écoule en sortie supérieure de ladite première conduite interne en flux tangentiellement à la paroi latérale à section circulaire de l'enceinte ce qui provoque sa séparation en une phase liquide et une phase gazeuse, puis
3) la phase liquide ou fluide partiellement dégazé redescend vers ledit troisième orifice (5c) de la paroi de fond à l'extrémité inférieure de l'enceinte, et de préférence remplit ladite enceinte jusqu'à un niveau en hauteur dessous de l'ouverture supérieure (2a) de ladite première conduite interne (2), et on la récupère, au niveau d'une conduite d'externe d'évacuation de liquide (15) connectée au dit troisième orifice de sortie (6c1) de ladite pièce de connexion, et
4) le gaz séparé dudit pétrole est aspiré dans ladite deuxième conduite interne vers ledit deuxième orifice (5b) de la paroi de fond à l'extrémité inférieure de l'enceinte, et on le récupère, au niveau d'une conduite d'externe d'évacuation de gaz (16) connectée au dit deuxième orifice de sortie (6b1) de ladite pièce de connexion.

## Patentansprüche

1. Modulare Unterwasseranlage zur Flüssigkeit/Gas-Trennung von zwei Phasen, jeweils einer flüssigen und einer gasförmigen, eines Fluids, insbesondere der flüssigen und gasförmigen Phase eines Rohöls, umfassend:
(a) eine am Meeresboden (20) ruhende und/oder verankerte Haupttragekonstruktion (10), an der eine Vielzahl von einheitlichen Flüssigkeit/Gas-Trennvorrichtungen (1) angeschlossen oder reversibel anschließbar sind, und
(b) mindestens eine einheitliche Flüssigkeit/Gas-Trennvorrichtung (1), die an der Haupttragekonstruktion (10) befestigt ist, wobei jede einheitliche Flüssigkeit/Gas-Trennvorrichtung (1) ein einziges Gehäuse aufweist, das eine dichte Wand (1a) aufweist, die gegen den Meeresbodendruck und gegen den Innendruck des Fluids beständig ist und die entlang einer vertikalen Drehachse (ZZ') angeordnet ist, wobei das Gehäuse umschließt:
b1) einen ersten Innenkanal (2) für die Zufuhr des Mehrphasenfluids, der innerhalb des Gehäuses von seinem unteren Ende, umfassend oder zusammenwirkend mit einer ersten Öffnung (5a), die durch einen Wandabschnitt, der als Bodenwand (1c) des Gehäuses bezeichnet wird, verläuft, zu seinem offenen oberen Ende (2a) nach oben führt und in den oberen Abschnitt (1-1) des Gehäuses mündet, und
b2) einen zweiten Innenkanal zum Abführen des Gases (3), der sich innerhalb des Gehäuses von seinem offenen oberen Ende (3a) aus, das bevorzugt höher angeordnet ist als die obere Öffnung (2a) des ersten Kanals, bis zu seinem unteren Ende erstreckt, umfassend oder zusammenwirkend mit einer zweiten Öffnung (5b), die durch die Bodenwand (1c) des Gehäuses verläuft, und
b3) eine dritte Öffnung (5c), die durch die Bodenwand des Gehäuses um die erste und zweite Öffnung (5a, 5b) der Bodenwand des Gehäuses herum verläuft, und
c) eine Vielzahl von 3-Wege-Verbindungsstücken (6), die auf der Haupttragekonstruktion (10) befestigt sind, wobei mindestens eins der Verbindungsstücken mit einem der Gehäuse (1) verbunden ist, wobei jedes der Verbindungsstücke umfasst:
c1) einen ersten Verbindungskanal (6a), dessen eines obere Ende verbunden oder verbindbar mit der ersten Öffnung (5a) der Bodenwand des Gehäuses ist, wobei der erste Verbindungskanal eine erste Auslassöffnung (6a1) umfasst, die verbunden oder verbindbar mit einer externen Versorgungsleitung für das Mehrphasenfluid (13) am Meeresboden ist, oder mit einem Rohrelement (11), das mit dem Ende einer externen Versorgungsleitung für das Mehrphasenfluid (13) am Meeresboden (20) verbunden ist, und
c2) einen zweiten Verbindungskanal (6b), dessen eines obere Ende verbunden oder verbindbar mit der zweiten Öffnung (5b) der Bodenwand des Gehäuses ist, wobei der zweite Verbindungskanal (6b) eine zweite Auslassöffnung (6b1) umfasst, die verbunden oder verbindbar mit einer externen Leitung zum Abführen von Gas (16) ist, und
c3) einen dritten Verbindungskanal (6c), der um den ersten und zweiten Verbindungskanal (6a, 6b) herum angeordnet ist und dessen oberes Ende verbunden oder verbindbar mit einer dritten Öffnung (5c) der Bodenwand des Gehäuses ist, wobei der dritte Verbindungskanal (6c) eine dritte Auslassöffnung (6c1) umfasst, die verbunden oder verbindbar mit einer externen Leitung zum Abführen von Flüssigkeit (15) ist.

2. Modulare Anlage nach Anspruch 1, **dadurch gekennzeichnet, dass** die zweite Öffnung (5b) der Bodenwand des Gehäuses eine zweite ringförmige Öffnung ist, die koaxial um die erste rohrförmige Öffnung (5a) der Bodenwand des Gehäuses herum angeordnet ist, und die dritte Öffnung (5c) der Bodenwand des Gehäuses eine dritte ringförmige Öffnung ist, die koaxial um die erste und zweite Öffnung (5a, 5b) der Bodenwand des Gehäuses herum angeordnet ist, und das 3-Wege-Verbindungsstück (6) ein Verbindungsstück mit drei koaxialen Wegen ist, das vertikal an der Tragekonstruktion(10) befestigt ist, umfassend:
c1) einen ersten Verbindungskanal (6a), der vertikal angeordnet ist und dessen erste Auslassöffnung (6a1) durch das axiale untere Ende des ersten Verbindungskanals (6a) gebildet wird, und
c2) einen zweiten Verbindungskanal (6b), der koaxial und an seinem oberen Ende um den ersten Kanal herum angeordnet ist, und vertikal verbunden oder verbindbar mit der zweiten ringförmigen Öffnung (5b) der Bodenwand des Gehäuses ist, umfassend die zweite seitliche Auslassöffnung (6b1), und
c3) einen dritten Verbindungskanal (6c), der an seinem oberen Ende koaxial um den ersten und zweiten Verbindungskanal (6a, 6b) herum angeordnet ist, und vertikal verbunden oder verbindbar mit der dritten ringförmigen Öffnung (5c) der Bodenwand des Gehäuses ist, umfassend die dritte seitliche Auslassöffnung (6c1).

3. Modulare Anlage nach Anspruch 2, **dadurch gekennzeichnet, dass** die auf dem Meeresboden liegende Tragekonstruktion (10) mindestens eine Vorrichtung zum Teilen und Verteilen (12) des Mehrphasenfluids trägt, die eine einzige, vorzugsweise vertikal angeordnete, rohrförmige Hauptöffnung (12a) mit axialer Zuführung aufweist, deren offenes unteres Ende (12a1) am Meeresboden (20) mit dem Ende einer externen Versorgungsleitung für das Mehrphasenfluid (13) verbunden oder verbindbar ist, und deren offenes oberes axiales Ende (12a2) mit einer Vielzahl von sekundären rohrförmigen Auslassöffnungen (12b, 12b1 bis 12b6) kommuniziert, die in Bezug auf die axiale Richtung geneigt sind, den gleichen Durchmesser aufweisen und in demselben Winkel (β) geneigt sind und symmetrisch und regelmäßig in Bezug auf und um die axiale Richtung angeordnet sind, wobei die sekundären rohrförmigen Auslassöffnungen (12b1 bis 12b6) verbunden oder verbindbar mit einer Vielzahl von Übertragungsleitungselementen (11) des zugeführten Fluids sind, die verbunden oder verbindbar mit einer Vielzahl der ersten Kanäle (6a) der Verbindungsstücken (6) sind, die verbunden oder verbindbar mit den unteren Enden einer Vielzahl von Gehäusen (1) sind.

4. Modulare Anlage nach Anspruch 3, **dadurch gekennzeichnet, dass** die Verbindungsstücke (6) und die Gehäuse (1) bezüglich der Verteilvorrichtung (12), vorzugsweise oberhalb und um die Verteilvorrichtung (12) herum, derart angeordnet sind, dass die Druckverluste zwischen der Verteilvorrichtung (12) und den Gehäusen (1) im Wesentlichen identisch zueinander sind, vorzugsweise dadurch, dass die Verbindungsstücke (6) und die Gehäuse (1) bezüglich der Verteilvorrichtung (12) symmetrisch oberhalb und um die Verteilvorrichtung (12) herum angeordnet sind.

5. Modulare Anlage nach einem der Ansprüche 1 bis 4, **dadurch gekennzeichnet, dass** das Gehäuse mit ersten Führungselementen (8a) des männlichen oder vorzugsweise weiblichen Typs verbunden ist, die außerhalb des Gehäuses angeordnet sind, und dass die Tragekonstruktion (10) zweite Führungselemente (10a) des weiblichen bzw. männlichen Typs umfasst, die mit den ersten komplementären Führungselementen zusammenwirken oder zusammenwirken können, um ein vertikales Andocken einer der Einheitsvorrichtungen gegenüber einem der Verbindungsstücke (6) umzusetzen.

6. Modulare Anlage nach einem der Ansprüche 1 bis 5, **dadurch gekennzeichnet, dass** das Gehäuse eine zylindrische Seitenwand (1a) mit kreisförmigem Querschnitt aufweist, deren oberes Ende mit einer vorzugsweise kugelförmig gewölbten Kappe (1b) verschlossen ist und deren Bodenwand (1c) sich an ihrem unteren Ende trichterförmig (1c1) nach unten hin verjüngt, um eine vertikale untere rohrförmige Wand (1c2) zu bilden, die die dritte ringförmige Öffnung zum Abführen von Flüssigkeit (5c) abgrenzt.

7. Modulare Anlage nach einem der Ansprüche 1 bis 6, **dadurch gekennzeichnet, dass** sich der erste Innenkanal (2) für die Zufuhr des Mehrphasenfluids vertikal, vorzugsweise im Wesentlichen auf der Achse des Gehäuses, in das Innere des zweiten Innenkanals (3) unter einem oberen Abschnitt (2b) des ersten Innenkanals erstreckt, wobei der obere Abschnitt (2b) des ersten Innenkanals eine Umkehrschlaufe (2b) zum Äußeren des zweiten Innenkanals bildet, die bevorzugt mit einer Fluidauslassdüse (2c) mit konisch erweiterter Wand endet, sodass die obere Öffnung (2a) des ersten Innenkanals begrenzt wird, vorzugsweise weiterhin mit abgeflachtem Querschnitt, sodass die obere Öffnung (2a) des ersten Kanals in der Nähe der Seitenwand (1a) des Gehäuses mündet, damit das Fluid parallel zu der zylindrischen Seitenwand fließt und in eine nach unten geneigte (a) Richtung (YY') orientiert ist, und der zweite Innenkanal (3) zum Abführen von Gas sich koaxial zu dem ersten Innenkanal unterhalb des oberen Abschnitts (2b) von diesem erstreckt, wobei vorzugsweise der erste Innenkanal (2) und der zweite Innenkanal (3) koaxiale Abschnitte (2', 3') mit größerem Durchmesser als ihre jeweiligen unteren Abschnitte (2", 3") aufweist.

8. Modulare Anlage nach einem der Ansprüche 1 bis 7, **dadurch gekennzeichnet, dass** das Gehäuse eine schraubenförmige Rinne (4) umfasst, die in der Nähe und/oder an der Innenfläche der Seitenwand des Gehäuses befestigt ist und deren oberes Ende sich am Boden der oberen Öffnung des ersten Innenkanals befindet und deren unteres Ende oberhalb der dritten ringförmigen Öffnung (5c) ankommt.

9. Modulare Anlage nach einem der Ansprüche 1 bis 8, **dadurch gekennzeichnet, dass** das Gehäuse in seinem oberen Abschnitt (1-1) eine Filtervorrichtung für Flüssigkeitstropfen, bevorzugt eine Koaguliervorrichtung (9), auf dem Gasweg zwischen der oberen Öffnung (2a) des ersten Innenkanals und der oberen Öffnung (3a) des zweiten Innenkanals umschließt.

10. Modulare Anlage nach einem der Ansprüche 1 bis 9, **dadurch gekennzeichnet, dass** sie Drucksensoren und einen Flüssigkeitsstandssensor (21,22) innerhalb des Gehäuses umschließt, vorzugsweise eine Füllstandsteuereinrichtung, die ein Radar- oder Sonarsensor oder ein Nukleonischer Füllstandssensor ist, der aus einer strahlemittierenden Stange (21) und einer oder mehreren Messleisten (22) zur Messung des Dichteprofils des Fluids über die gesamte Höhe des Gehäuses besteht.

11. Modulare Anlage nach einem der Ansprüche 1 bis 10, **dadurch gekennzeichnet, dass** das Gehäuse aus zwei Gehäuseabschnitten gebildet ist, die aneinander befestigt (1a-3) sind, umfassend:
- einen oberen Wandabschnitt (1a-1), umfassend eine gewölbte, vorzugsweise kugelförmige Kappe (1b) am oberen Ende und
- einen unteren Wandabschnitt (1a-2), umfassend die Bodenwand (1c).

12. Modulare Anlage nach einem der Ansprüche 1 bis 11, **dadurch gekennzeichnet, dass** die Tragekonstruktion (10) mehrere Verbindungsstücke und Gehäuse (1a) aufweist, die damit verbunden sind, vorzugsweise mindestens 4 Verbindungsstücke, vorzugsweise symmetrisch angeordnet.

13. Einheitliche Flüssig-/Gas-Trennvorrichtung von Phasen, jeweils einer flüssigen und einer gasförmigen, eines Fluids, verwendbar in einer wie in den Ansprüchen 1 bis 12 definierten modularen Anlage, **dadurch gekennzeichnet, dass** die einheitliche Flüssigkeit/Gas-Trennvorrichtung (1) ein einziges Gehäuse aufweist, das eine dichte Wand (1a) aufweist, die gegen den Meeresbodendruck und gegen den Innendruck des Fluids beständig ist und die entlang einer vertikalen Drehachse (ZZ') angeordnet ist, wobei das Gehäuse umschließt:
1) einen ersten Innenkanal (2) für die Zufuhr des Mehrphasenfluids, der innerhalb des Gehäuses von seinem unteren Ende, umfassend oder zusammenwirkend mit einer ersten Öffnung (5a), die durch einen Wandabschnitt, der als Bodenwand (1c) des Gehäuses bezeichnet wird, verläuft, zu seinem offenen oberen Ende (2a) führt, und in den oberen Abschnitt (1-1) des Gehäuses mündet, und
2) einen zweiten Innenkanal zum Abführen des Gases (3), der sich innerhalb des Gehäuses von seinem offenen oberen Ende (3a) aus, das bevorzugt höher angeordnet ist als die obere Öffnung (2a) des ersten Kanals, bis zu seinem unteren Ende erstreckt, umfassend oder zusammenwirkend mit einer zweiten Öffnung (5b), die durch die Bodenwand (1c) des Gehäuses verläuft, und
3) eine dritte Öffnung (5c), die durch die Bodenwand des Gehäuses koaxial um die ersten und zweiten Öffnungen (5a, 5b) der Bodenwand des Gehäuses verläuft.

14. Verfahren zur Herstellung einer modularen Anlage nach einem der Ansprüche 1 bis 12, **dadurch gekennzeichnet, dass** die folgenden aufeinanderfolgenden Schritte ausgeführt werden, in denen:
a) die einheitliche Vorrichtung, die an einer Verbindung (19) an einem Schiff (24) an der Oberfläche (25) aufgehängt ist, abgesenkt wird, und
b) vorzugsweise ihre Annäherung zum Andocken an das Verbindungsstück (6), das an der Tragekonstruktion (10) befestigt ist, mittels der ersten Führungselemente (8a), die an dem Gehäuse (1) befestigt sind, und der zweiten Führungseinrichtung (10a), die an der Tragekonstruktion (10) befestigt ist, geführt wird, wobei die zweiten Führungselemente mit den ersten Führungselementen zusammenwirken, und
c) das Gehäuse mit einem der Verbindungsstücke mittels eines Befestigungsflansches (7) und koaxialer Dichtungen (7-1,7-2 und 7-3) zwischen der ersten, zweiten und dritten Öffnung (5a, 5b, 5c), die durch die Bodenwand (1c) des Gehäuses führen, und dem ersten, zweiten und dritten Verbindungskanal (6a, 6b, 6c) des Verbindungsstücks lösbar verbunden wird.

15. Verfahren zur Trennung der flüssigen und gasförmigen Phase eines Rohöls mittels einer Anlage nach einem der Ansprüche 1 bis 12, **dadurch gekennzeichnet, dass** die folgenden Schritte durchgeführt werden, in denen:
1) das Rohöl durch einen Versorgungskanal (13) zu der ersten Öffnung (5a) der Bodenwand des Gehäuses über und durch den ersten Kanal (6a) eines der Verbindungsstücke (6) bei einem reduzierten Druck P1,der niedriger als der statische Druck am Meeresboden P2 ist, geschickt wird, und
2) das Rohöl durch den ersten Innenkanal (2) des Gehäuses nach oben strömt und dann am oberen Ausgang des ersten Innenkanals in einem zu der Seitenwand mit kreisförmigem Querschnitt des Gehäuses tangentialen Fluss nach oben strömt, wodurch es sich in eine flüssige und eine gasförmige Phase trennt, und dann
3) die teilweise entgaste Flüssigkeits- oder Fluidphase in Richtung der dritten Öffnung (5c) der Bodenwand am unteren Ende des Gehäuses absinkt und bevorzugt das Gehäuse bis zu einer Höhe unter der oberen Öffnung (2a) des ersten Innenkanals (2) füllt, und auf Höhe einer externen Leitung zum Abführen von Flüssigkeit (15), die mit der dritten Auslassöffnung (6c1) des Verbindungsstücks verbunden ist, zurückgewonnen wird, und
4) das von dem Öl getrennte Gas in den zweiten Innenkanal in Richtung der zweiten Öffnung (5b) der Bodenwand am unteren Ende des Gehäuses gesaugt wird und auf Höhe einer externen Leitung zum Abführen von Gas (16), die mit der zweiten Auslassöffnung (6b1) des Verbindungsstücks verbunden ist, zurückgewonnen wird.

## Claims

1. A modular undersea installation for liquid/gas separation of respective liquid and gaseous phases of a fluid, in particular the liquid and gaseous phases of a crude oil, the installation comprising:
a) a main support structure (10) resting on and/or anchored to the sea bottom (20) and having a plurality of unitary devices (1) for liquid/gas separation connected thereto or suitable for being connected thereto in reversible manner; and
b) at least one unitary device (1) for liquid/gas separation fastened on said main support structure (10), each said unitary device (1) for liquid/gas separation comprising a single enclosure comprising a leaktight wall (1a) that withstands pressure at the sea bottom and the internal pressure of said fluid, the said leaktight wall being arranged about a vertical axis of revolution (ZZ'), and said enclosure containing:
• b1) a first internal pipe (2) for delivering the multiphase fluid, the first internal pipe (2) rising within said enclosure from its bottom end that includes or co-operates with a first orifice (5a) passing through a wall portion of the enclosure referred to as the end wall (1c), up to its open top end (2a) opening out into a top portion (1-1) of the enclosure; and
• b2) a second internal pipe (3) for discharging gas, the second internal pipe (3) extending within said enclosure from its open top end (3a), preferably located higher than said top opening (2a) of the first pipe, to its bottom end that includes or co-operates with a second orifice (5b) passing through the end wall (1c) of the enclosure; and
• b3) a third orifice (5c) passing through said end wall of the enclosure around said first and second orifices (5a, 5b) in the end wall of the enclosure; and
c) a plurality of three-channel connection pieces (6) fastened to said support structure (10), with at least one said connection piece being connected to a said enclosure (1), each said connection piece comprising:
• c1) a first connection duct (6a) having a top end connected to a said first orifice (5a) of the end wall of said enclosure, or suitable for being connected thereto, said first connection duct having a first outlet orifice (6a1) connected to an external pipe (13) for supplying said multiphase fluid at the sea bottom or to a pipe element (11) connected to the end of an external pipe (13) for supplying said multiphase fluid at the sea bottom (20), or suitable for being connected thereto; and
• c2) a second connection duct (6b) having a top end connected to a said second orifice (5b) of the end wall of said enclosure, or suitable for being connected thereto, said second connection duct (6b) having a second outlet orifice (6b1) connected to an external pipe (16) for discharging gas, or suitable for being connected thereto; and
• c3) a third connection duct (6c) arranged around said first and second connection ducts (6a, 6b) at its top end connected to a said third orifice (5c) of the end wall of said enclosure, or suitable for being connected thereto, said third connection duct (6c) having a third outlet orifice (6c1) connected to an external pipe (15) for discharging liquid, or suitable for being connected thereto.

2. A modular installation according to claim 1, **characterized in that** said second orifice (5b) of the end wall of the enclosure is an annular second orifice arranged coaxially around said tubular first orifice (5a) of the end wall of the enclosure, and said third orifice (5c) of the end wall of the enclosure is an annular third orifice arranged coaxially around said first and second orifices (5a, 5b) of the end wall of the enclosure, and said three-channel connection piece (6) is a connection piece having three coaxial channels and arranged vertically on said support structure (10) and comprising:
• c1) a first connection duct (6a) arranged vertically and from which said first outlet orifice (6a1) is constituted by the axial bottom end of said first connection duct (6a); and
• c2) a second connection duct (6b), arranged coaxially around said first duct at its top end, and connected vertically to an annular said second orifice (5b) of said end wall of the enclosure, or suitable for being connected vertically thereto, and including a said second outlet orifice (6b1) constituting a lateral orifice; and
• c3) a third connection duct (6c) arranged coaxially around said first and second connection ducts (6a, 6b) at its top end, and connected vertically to an annular said third orifice (5c) of the end wall of the enclosure, or suitable for being connected vertically thereto, and including a said third outlet orifice (6c1) constituting a lateral orifice.

3. A modular installation according to claim 2, **characterized in that** said support structure (10) resting on the sea bottom supports at least one device (12) for dividing and distributing the multiphase fluid and presenting a single main tubular axial supply orifice (12a) that is preferably arranged vertically, having its open bottom end (12a1) connected to the end of an external pipe (13) for supplying said multiphase fluid at the bottom of the sea (20), or suitable for being connected thereto, and having its open axial top end (12a2) communicating with a plurality of secondary tubular outlet orifices (12b, 12b1 to 12b6) that are inclined relative to said axial direction, that are of the same diameter, and that are inclined at the same angle (β) and that are arranged symmetrically and regularly relative to and around said axial direction, said secondary tubular outlet orifices (12b1 to 12b6) being connected to a plurality of pipe elements (11) for transferring supply fluid, or being suitable for being connected thereto, which pipe elements are connected respectively to a plurality of said first ducts (6a) of said connection pieces (6), or are suitable for being connected thereto, which connection pieces are connected to the bottom ends of a plurality of said enclosures (1), or are suitable for being connected thereto.

4. A modular installation according to claim 3, **characterized in that** said connection pieces (6) and said enclosures (1) are arranged relative to said division device (12), preferably above and around said division device (12), in such a manner that head losses between said division device (12) and said enclosures (1) are substantially identical to one another, said connection pieces (6) and said enclosures (1) preferably being arranged symmetrically relative to said division device (12) above and around said division device (12).

5. A modular installation according to any one of claims 1 to 4, **characterized in that** said enclosure is secured to first guide elements (8a) of male or preferably female type, arranged at the outside of said enclosure, and said support structure (10) includes second guide elements (10a) of female or of male type, respectively, co-operating with said first complementary guide elements, or suitable for co-operating therewith, to enable a said unitary device to dock vertically facing a said connection piece (6).

6. A modular installation according to any one of claims 1 to 5, **characterized in that** said enclosure has a cylindrical side wall (1a) of circular section, having its top end closed by a domed and preferably spherical cap (1b) and having an end wall (1c) at its bottom end that is in the form of a funnel (1c1) that tapers downwards to form a vertical tubular bottom wall (1c2) defining said annular third orifice (5c) for discharging liquid.

7. A modular installation according to any one of claims 1 to 6, **characterized in that** said first internal pipe (2) for delivering multiphase fluid extends vertically, preferably substantially on the axis of said enclosure, inside said second internal pipe (3) beneath a top portion (2b) of said first internal pipe, which top portion (2b) of said first internal pipe loops back outside said second internal pipe, preferably terminating in a fluid outlet nozzle (2c) having a flared wall defining a said top opening (2a) of said first internal pipe, more preferably having a section of flat shape, such that said top opening (2a) of the first pipe opens out in the proximity of the side wall (1a) of the enclosure so that the fluid flows out therefrom parallel to said cylindrical side wall in a direction (YY') that slopes downwardly (α), and said second internal pipe (3) for discharging gas extends axially coaxially relative to said first internal pipe beneath said top portion (2b) thereof, said first and second internal pipes (2, 3) preferably presenting coaxial portions (2', 3') that are greater in diameter than their respective bottom portions (2", 3").

8. A modular installation according to any one of claims 1 to 7, **characterized in that** the enclosure includes a helical gutter (4) fastened in the proximity of and/or against the inside surface of said side wall of the enclosure and having its top end beneath the top opening of the first internal pipe and its bottom end terminating above said annular third orifice (5c).

9. A modular installation according to any one of claims 1 to 8, **characterized in that** in its top portion (1-1), the enclosure contains a device for filtering liquid droplets, preferably a coalescence device (9), on the path of the gas between the top opening (2a) of the first internal pipe and the top opening (3a) of the second internal pipe.

10. A modular installation according to any one of claims 1 to 9, **characterized in that** it includes pressure detection sensors and a liquid level sensor (21, 22) within the enclosure, preferably a level-monitoring device in the form of a radar or sonar type probe or a nuclear level sensor constituted by a ray-emitting strip (21) and one or more measuring strips (22) enabling the density profile of the fluid to be measured over the entire height of the enclosure.

11. A modular installation according to any one of claims 1 to 10, **characterized in that** the enclosure is made up of two enclosure portions (1a-3) that are fastened to each other and comprising:
• a top wall portion (1a-1) having a domed, and preferably spherical, cap (1b) at its top end; and
• a bottom wall portion (1a-2) including a said end wall (1c).

12. A modular installation according to any one of claims 1 to 11, **characterized in that** said support structure (10) comprises a plurality of said connection pieces and of said enclosures (1a) that are connected thereto, there being preferably at least four of said connection pieces, which are preferably arranged symmetrically.

13. A unitary device for liquid/gas separation of respective liquid and gaseous phases of a fluid, suitable for a modular installation as defined in any one of claims 1 to 12, **characterized in that** said unitary device (1) for liquid/gas separation comprises a single enclosure comprising a leaktight wall (1a) that withstands pressure at the sea bottom and the internal pressure of said fluid, the leaktight wall being arranged about a vertical axis of revolution (ZZ'), and said enclosure containing:
1) a first internal pipe (2) for delivering the multiphase fluid, the first internal pipe (2) rising within said enclosure from its bottom end that includes or co-operates with a first orifice (5a) passing through a wall portion referred to as the end wall (1c) of the enclosure up to its open top end (2a) opening out into the top portion (1-1) of the enclosure; and
2) a gas-discharge second internal pipe (3) extending within said enclosure from its open top end (3a), preferably located higher than said top opening (2a) of the first pipe, to its bottom end that includes or co-operates with a second orifice (5b) passing through the end wall (1c) of the enclosure; and
3) a third orifice (5c) passing through said end wall of the enclosure coaxially around said first and second orifices (5a, 5b) in the end wall of the enclosure.

14. A method of making a modular installation according to any one of claims 1 to 12, **characterized in that** the following successive steps are performed:
a) lowering a said unitary device suspended from a ship (24) on the surface (25) by a tie (19); and
b) preferably guiding its approach for docking with a said connection piece (6) fastened on said support structure (10) by using first guide elements (8a) secured to said enclosure (1) and said second guide means (10a) secured to said support structure (10), said second guide elements co-operating with said first guide elements; and
c) connecting said enclosure to a said connection piece in disconnectable manner by using a fastener flange (7) and coaxial sealing gaskets (7-1, 7-2, and 7-3) between said first, second, and third orifices (5a, 5b, 5c) passing through the end wall (1c) of the enclosure and said first, second, and third connection ducts (6a, 6b, 6c) respectively of said connection piece.

15. A method of separating liquid and gaseous phases of crude oil by using an installation according to any one of claims 1 to 12, **characterized in that** the following successive steps are performed:
1) sending crude oil by means of an arrival pipe (13) to said first orifice (5a) of said end wall of the enclosure via and through said first duct (6a) of a said connection piece (6), at a reduced pressure P1 that is lower than the static pressure P2 at the sea bottom; and
2) the crude oil rising within said first internal pipe (2) of the enclosure, then flowing through a top outlet of said first internal pipe as a flow tangential to the side wall of circular section of the enclosure, thereby causing it to be separated into a liquid phase and a gaseous phase; then
3) a liquid phase or partially degassed fluid moves back down towards said third orifice (5c) of the end wall at the bottom end of the enclosure, and preferably fills said enclosure up to a height level below the top opening (2a) of said first internal pipe (2), and being recovered via an external pipe (15) for discharging liquid that is connected to said third outlet orifice (6c1) of said connection piece; and
4) the gas separated from said oil is sucked into said second internal pipe towards said second orifice (5b) of the end wall at the bottom end of the enclosure, and is recovered via an external pipe (16) for discharging gas that is connected to said second outlet orifice (6b1) of said connection piece.
